(19) Europäisches Patentamt
European Patent Office
Office européen des brevets

(11) EP 2 001 917 B1

(12) **FASCICULE DE BREVET EUROPEEN**

(45) Date de publication et mention de la délivrance du brevet:
**02.07.2014 Bulletin 2014/27**

(21) Numéro de dépôt: **07727552.7**

(22) Date de dépôt: **30.03.2007**

(51) Int Cl.:
***H01M 10/0565*** *(2010.01)* ***C08F 293/00*** *(2006.01)*
***C08J 3/20*** *(2006.01)*

(86) Numéro de dépôt international:
**PCT/EP2007/053080**

(87) Numéro de publication internationale:
**WO 2007/113236 (11.10.2007 Gazette 2007/41)**

(54) **ELECTROLYTES POLYMERES SOLIDES A BASE DE COPOLYMERES TRIBLOCS NOTAMMENT POLYSTYRENE-POLY(OXYETHYLENE)- POLYSTYRENE**

FESTE POLYMERELEKTROLYTE AUF BASIS VON TRIBLOCKCOPOLYMEREN, INSBESONDERE POLYSTYROL-POLY(OXYETHYLEN)-POLYSTYROL-COPOLYMEREN

SOLID POLYMERIC ELECTROLYTES BASED ON TRIBLOCK COPOLYMERS, IN PARTICULAR POLYSTYRENE-POLY(OXYETHYLENE)-POLYSTYRENE COPOLYMERS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **31.03.2006 FR 0651158**

(43) Date de publication de la demande:
**17.12.2008 Bulletin 2008/51**

(73) Titulaire: **ARKEMA FRANCE**
**92700 Colombes (FR)**

(72) Inventeurs:
- **BERTIN, Denis**
**F-13013 Marseille (FR)**
- **PHAN, Trang**
**F-13009 Marseille (FR)**
- **BOUCHET, Renaud**
**F-13004 Marseille (FR)**

(74) Mandataire: **Albani, Dalila**
**Arkema France**
**Département Propriété Industrielle**
**420, rue d'Estienne d'Orves**
**92705 Colombes Cedex (FR)**

(56) Documents cités:
**EP-A1- 1 553 117** **WO-A-88/03154**
**DD-A5- 297 281** **US-A- 5 622 792**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 001 917 B1

## Description

### DOMAINE TECHNIQUE

L'invention concerne des électrolytes polymères solides à base de copolymères triblocs qui sont notamment des copolymères polystyrène-poly(oxyéthylène)-polystyrène ou PS-b-POE-b-PS.

Le domaine technique de l'invention peut. être défini, de manière générale comme celui des électrolytes polymères solides ou EPS qui sont notamment mis en oeuvre dans les accumulateurs au lithium $Li^+$.

Une cellule élémentaire d'une batterie rechargeable ou accumulateur au lithium comporte (voir figure 1) une anode (à la décharge) (1), généralement en lithium métallique ou à base de carbone, et une cathode (idem : à la décharge) (2), généralement en un composé d'insertion du lithium de type oxyde métallique tel que $LiMn_2O_4$, $LiCoO_2$ ou $LiNiO_2$, entre lesquelles se trouve intercalé un électrolyte conducteur (3) des ions lithium.

En cas d'utilisation, donc lors de la décharge de la batterie (voir figure 1), le lithium relâché par oxydation au pôle (-) par l'anode (1) sous forme ionique $Li^+$, migre à travers l'électrolyte conducteur (3) et vient s'insérer par une réaction de réduction dans le réseau cristallin du matériau actif de la cathode (2) pôle (+). Le passage de chaque ion $Li^+$ dans le circuit interne de l'accumulateur est exactement compensé par le passage d'un électron dans le circuit externe (4), générant un courant électrique qui peut servir à alimenter divers appareils (5) dans le domaine de l'électronique portable tels que des ordinateurs ou téléphones, ou dans le domaine des applications de plus grande densité de puissance et d'énergie, tels que les véhicules électriques.

Lors de la charge (figure 2), les réactions électrochimiques sont inversées, les ions lithium sont libérés par oxydation au pôle (+), « cathode » (2) (la cathode à la décharge devient l'anode à la recharge), ils migrent à travers l'électrolyte conducteur (3) dans le sens inverse de celui dans lequel ils circulaient lors de la décharge, et viennent se déposer ou s'intercaler par réduction au pôle (-), «anode » (1) (de même l'anode à la décharge devient là cathode à la recharge) où ils peuvent former des dendrites de lithium métallique (6), causes possibles de courts-circuits.

Dans les accumulateurs, l'électrolyte ou conducteur ionique (3) qui sépare les électrodes est un élément fondamental.

Cet électrolyte peut être liquide, solide, ou peut encore se présenter sous la forme d'un film polymère poreux par exemple en poly(difluorure de vinylidène) (PVDF) ou en poly(difluorure de vinylidène-hexafluoropropylène) (PVDF-HDP) imprégné d'un électrolyte liquide.

Les électrolytes liquides sont généralement à base de carbonates tels que le carbonate de propylène, le carbonate d'éthylène et le diméthylcarbonate. Ces électrolytes liquides présentent une bonne conductivité, de l'ordre de 1 mS/cm à la température ambiante, et permettent un fonctionnement entre -20 et 60°C. Ils n'offrent cependant pas des performances et des conditions de sécurité optimales, en particulier du fait de la formation de dendrites lors de la charge, des problèmes d'emballement thermique, des fuites possibles, etc.

A la fin des années 1970, Armand et al. [1] ont démontré que les polymères « secs » pourraient éventuellement remplacer les électrolytes liquides dans les batteries au $Li^+$. Les électrolytes à base de polymères secs, comme le poly(oxyéthylène) (POE), bien que plus sûrs, du fait de l'absence de liquide, ont des valeurs de conductivité beaucoup trop faibles pour une utilisation à température ambiante.

Ainsi, la conductivité $\sigma$ obtenue dans le document **[1]** avec un système composé de POE et de $LiClO_4$ n'est que de $10^{-7}$ S/cm.

Depuis, la recherche et le développement d'électrolytes polymères solides (EPS) non seulement légers, flexibles, faciles à mettre en oeuvre mais possédant en outre une conductivité ionique à température ambiante comparable aux électrolytes liquides se sont activement poursuivis. Parmi les électrolytes polymères solides, on peut citer outre ceux à base de POE, ceux à base :

de

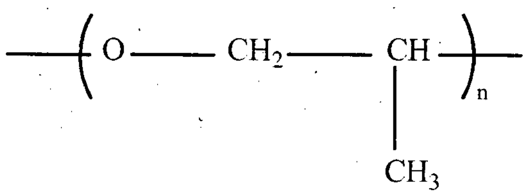

,

de

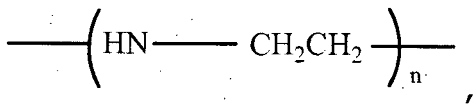

de

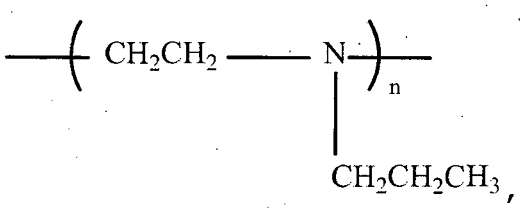

ou de

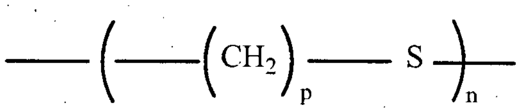

avec p = 2 à 6.

Nous nous intéressons ici plus particulièrement aux électrolytes solides à base de POE.

Afin d'augmenter la conductivité de la matrice de POE de l'électrolyte polymère solide, différents moyens ont été envisagés dans la littérature parmi lesquels on peut citer par exemple :

- L'incorporation d'une fraction de nano-charges minérales telles que ($SiO_2$, $TiO_2$, ou $Al_2O_3$) dans le POE.

Cette incorporation de nanocharges minérales présente l'inconvénient d'une mise en oeuvre délicate pour obtenir une dispersion homogène des nanocharges, en outre, la présence d'aggrégats diminue les propriétés conductrices et mécaniques.

- La réticulation des chaînes de POE joue aussi un rôle essentiellement mécanique. La conductivité diminue avec le taux de réticulation en diminuant les mobilités segmentaires et dégrade aussi les performances de l'interface entre le pôle(-) et l'électrolyte (augmentation de la résistance interfaciale dans le cas du lithium, passivation, dégradation de la qualité du contact).

Les inconvénients liés à la réticulation sont donc essentiellement un problème de stabilité de la batterie et une conductivité plus faible.

- La copolymérisation des macromères POE. On retrouve les performances du POE en termes de conductivité car les tailles des chaînes macromoléculaires sont du même ordre, sinon la tenue mécanique est insuffisante. Et enfin,
- L'élaboration de copolymères séquencés, ou à blocs à base de POE.

C'est sur cette dernière stratégie que les travaux de recherche se sont développés depuis quelques années grâce au fort développement des méthodes de polymérisation radicalaire contrôlée telles que l'ATRP (« Atom Transfer Radical Polymerization » en anglais), la NMP (« Nitroxide Mediated Polymerization » en anglais) dans le milieu des années 1990 permettant de préparer aisément ces copolymères à blocs.

Les copolymères à blocs de POE utilisés dans les électrolytes polymères solides (EPS) peuvent être des copolymères diblocs A-B ou des copolymères triblocs A-B-A.

En ce qui concerne les copolymères diblocs, Sodaway et al. **[2]** ont été les premiers à étudier les copolymères à blocs en tant que base pour un électrolyte polymère solide (EPS). En en ce qui concerne les copolymères diblocs, leurs travaux ont essentiellement porté sur les copolymères diblocs dont le premier bloc est un poly(méthacrylate d'alkyle) tel que le poly(méthacrylate de lauryle) (PLMA), le poly(méthacrylate de n-butyle) (PnMBA), ou le poly(méthacrylate de méthyle), et le second bloc est le poly(méthacrylate de polyéthylène glycol, 9 unités d'OE) (PMAPEG). Ces copolymères

ont été synthétisés par voie anionique ou par la méthode ATRP.

Les matériaux obtenus sont dimensionnellement stables, ne coulent pas et se comportent comme un élastomère. Le copolymère PLMA-b-PMAPEG dopé au $LiCF_3SO_3$ présente une conductivité de l'ordre de $8.10^{-6}$ S/cm à température ambiante et est électrochimiquement stable sur une large fenêtre de potentiel.

Leurs travaux ont également démontré que la conductivité du PMAPEG dans ces électrolytes copolymères à blocs évolue inversement à la température de transition vitreuse $T_g$ du second bloc. Ainsi, $\sigma_{PLMA\text{-}PMAPEG}$ ($T_{gPLMA}$ = -35°C) > $\sigma_{PnBMA\text{-}PMAPEG}$ ($T_{gPnBMA}$ = 400C) > $\sigma_{PMMA\text{-}PMAPEG}$ ($T_{gPMMA}$ = 1000°C).

Un test de cyclage a été également réalisé sur une cellule de batterie $Li/Li^+/VO_x$, l'électrolyte utilisé est le copolymère PnBMA-PMAPEG dopé au $LiCF_3SO_3$. Le test a montré que la capacité de ces batteries reste stable à 80% au bout de 300 cycles.

Les inconvénients des EPS préparés avec les copolymères de ce document sont une conductivité faible à la température ambiante.

Il est certes possible d'augmenter la conductivité en abaissant la température de transition vitreuse (Tg) des matériaux (qui ont alors un caractère élastomère) mais alors se pose le problème de la faisabilité des films.

En ce qui concerne les copolymères triblocs, Jannasch et al. **[3]** ont étudié les copolymères triblocs préparés par méthode ATRP dont le bloc central est un POE ou un POE-co-PPO et le bloc externe est du poly(pentafluorostyrène) (PFS).

Les courts blocs PFS (Tg = 33°C) et le bloc POE ou POE-co-PPO dopé au $LiN(CF_3SO_2)_2$ (Tg -65°C) sont immiscibles, ce qui conduit à une microséparation de phase conférant aux électrolytes des propriétés électriques et mécaniques intéressantes.

Avec ce système, ils ont obtenu une conductivité ionique de $3.10^{-5}$ S/cm. La conductivité du copolymère PFS-POE-co-PPO-PFS est légèrement supérieure à celle du PFS-POE-PFS, ceci est dû simplement à la proportion du polyéther qui est plus élevée dans PFS-POE-co-PPO-PFS (85 wt%) que dans PFS-POE-PFS (71 wt%).

L'inconvénient majeur de ce système est une conductivité qui n'est encore pas suffisamment améliorée à la température ambiante par rapport aux systèmes déjà décrits précédemment dans la littérature. L'intérêt d'une telle structure comme EPS n'est pas démontrée par rapport à du POE de même masse molaire.

Récemment, Niitani et al. {4] ont décrit un nouvel électrolyte copolymère tribloc composé de PMAPEG (23 unités d'OE) en tant que bloc central et de PS en tant que blocs externes.

Ce copolymère dont la masse moléculaire moyenne en nombre ($M_n$) est de 250 700 g/mol, est préparé par la méthode ATRP, les blocs PS représentent 8% massique du copolymère. Les images TEM ont montré que la microséparation de phase dépend de la proportion de POE et de PS dans le copolymère. La taille du domaine PS ou POE est inférieure à 100 nm et diminue avec l'augmentation de la proportion de POE. Le copolymère dopé au $LiClO_4$ avec un rapport (OE/Li = 20) présente de bonnes propriétés mécaniques et a la conductivité ionique la plus élevée à T = 30°C ($\sigma = 2.10^{-4}$ S/cm) connue à l'heure actuelle pour les EPS étudiés.

La cellule de batterie $Li/Li+/LiCoO_2$ montre une capacité de décharge à température ambiante de 100 mAh/g à 0,1 C, la batterie présente également une bonne réversibilité charge/décharge.

On met donc en évidence dans ce document une nette amélioration de la conductivité ionique, qui n'est néanmoins pas encore similaire à celle des électrolytes liquides.

En outre, les copolymères de ce document ont des masses moléculaires moyennes en nombre très élevées ($M_n$ = 250700 g/mol) impliquant des viscosités très importantes. En conséquence, ils sont très difficiles à mettre en oeuvre avec des techniques classiques telles que l'extrusion.

De plus, le nombre de transport en Li+ est faible, ce qui entraine une mauvaise tenue en puissance et une chute importante de la capacité au-delà de C/10.

Il existe donc, au regard de ce qui précède, un besoin pour un électrolyte polymère solide (EPS) qui présente non seulement d'excellentes propriétés mécaniques et thermiques, mais aussi d'excellentes propriétés conductrices, et en particulier une conductivité ionique élevée et améliorée par rapport aux électrolytes polymères solides connus pouvant être mis en oeuvre avec des procédés classiques d'obtention de films.

Il existe notamment un besoin pour un électrolyte polymère solide qui soit léger, flexible, maniable, facile à mettre en oeuvre, qui présente une bonne tenue mécanique et qui ait en outre une conductivité ionique élevée en particulier à température ambiante.

Le but de la présente invention est de fournir un électrolyte polymère solide (EPS) qui réponde, entre autres, aux besoins énumérés ci-dessus.

Le but de la présente invention est en outre de fournir un électrolyte polymère solide (EPS) qui ne présente pas les défauts, inconvénients, limitations et désavantages des électrolytes polymères solides de l'art antérieur et qui résolve les problèmes des électrolytes polymères solides de l'art antérieur.

Ce but, et d'autres encore sont atteints, conformément à l'invention, par un électrolyte polymère solide (EPS) qui comprend au moins un sel électrolyte, lequel :

- les blocs A sont des polymères susceptibles d'être préparés à partir d'un ou plusieurs monomères, choisis parmi le styrène, l'o-méthylstyrène, le p-méthylstyrène, le m-t-butoxystyrène, le 2,4-diméthylstyrène, le m-chlorostyrène, le p-chlorostyrène, le 4-carboxystyrène, le vinylanisole, l'acide vinylbenzoïque, la vinylaniline, le vinylnaphtalène, le 9-vinylanthracène, les méthacrylates d'alkyle de 1 à 10C, le 4-chlorométhylstyrène, le divinylbenzène, le triméthylol propane triacrylate, le tétraméthylolpropane tétraacrylate, les acrylates d'alkyle de 1 à 10C, l'acide acrylique, l'acide méthacrylique.
- le bloc B est un polymère susceptible d'être préparé à partir d'un ou plusieurs monomères choisis parmi l'oxyde d'éthylène (OE) et l'oxyde de propylène (OP), ; la proportion de blocs A du copolymère est de 15 à 30% en masse de la masse totale du copolymère, la masse moléculaire moyenne en nombre du copolymère tribloc A-B-A est de 10 000 à 15 000, et la quantité de sel électrolyte ajouté, définie par le [bloc central B tel que 0 E]/[Li] (en mole) est dans la gamme de 15 à 30.

Les blocs A peuvent être des homopolymères. susceptibles d'être préparés à partir d'un seul monomère choisi parmi les monomères tels qu'énumérés ci-dessus ou bien ils peuvent être des copolymères statistiques susceptibles d'être préparés à partir de plusieurs des monomères cités ci-dessus.

En particulier, les blocs A peuvent être des homopolymères susceptibles d'être préparés à partir d'un monomère choisi parmi le styrène, l'o-méthylstyrène, le p-méthylstyrène, le m-t-butoxystyrène, le 2,4-diméthylstyrène, le m-chlorostyrène, le p-chlorostyrène, le 4-carboxystyrène, le vinylanisole, l'acide vinylbenzoïque, la vinylaniline, le vinylnaphtalène, le 9-vinylanthracène, les méthacrylates d'alkyle de 1 à 10C, l'acide acrylique, l'acide méthacrylique ; ou bien les blocs A peut être des copolymères statistiques susceptibles d'être préparés à partir d'un monomère décrit précédemment et d'un ou plusieurs autres monomères choisis parmi le 4-chlorométhyl styrène, le divinyl benzène, le triméthylolpropane triacrylate, le tétraméthylolpropane tétraacrylate, les acrylates d'alkyle de 1 à 10 C, l'acide acrylique, l'acide méthacrylique.

Le bloc B peut être un homopolymère susceptible d'être préparé à partir d'un seul monomère choisi parmi les monomères énumérés ci-dessus, ou bien le bloc B peut être un copolymère statistique oui susceptible d'être préparé à partir de plusieurs monomères choisis parmi les monomères énumérés ci-dessus pour le bloc B.

Les EPS selon l'invention contiennent des copolymères blocs de type ABA spécifiques dont la mise en oeuvre dans des EPS n'a jamais été décrite dans l'art antérieur.

Les électrolytes polymères solides selon l'invention présentent une combinaison de propriétés mécaniques et électriques, due essentiellement aux copolymères ABA mis en oeuvre qui n'a jamais été obtenue jusqu'alors.

Les EPS selon l'invention en particulier lorsqu'ils se présentent sous la forme de films, membranes sont souples, flexibles, présentent une bonne tenue mécanique et sont maniables. En outre, de manière étonnante, ils présentent aussi une excellente conductivité électrique pouvant atteindre par exemple jusqu'à $9.10^{-4}$ $S/cm^{-2}$ à température ambiante (à savoir généralement 20°C à 30°C) qui n'avait jamais été atteinte dans l'art antérieur pour les électrolytes solides.

L'électrolyte polymère solide selon l'invention satisfait simultanément et de manière étonnante aux deux exigences fondamentales pour un électrolyte polymère solide qui sont d'une part une conductivité ionique élevée, et d'autre part d'excellentes propriétés mécaniques. Ces deux caractéristiques étaient jusqu'à présent considérés comme étant incompatibles. L'EPS selon l'invention comprenant le copolymère spécifique ABA décrit plus haut va donc à l'encontre d'un préjugé largement répandu dans ce domaine de la technique et surmonte ce préjugé.

Dans les copolymères de l'EPS selon l'invention, les blocs A par exemple de PS (polystyrène) confèrent aux EPS les excellentes propriétés mécaniques désirées tandis que le bloc B par exemple de POE leur apporte la conductivité ionique.

Les polymères triblocs ABA se composent de deux polymères chimiquement dissemblables, donc immiscibles, liés entre eux par des liaisons covalentes. Sous certaines conditions, une forte répulsion entre les blocs induit la microséparation de phase caractérisée par l'organisation des microdomaines en structures régulières et périodiques.

Il a été mis en évidence de manière inattendue que les copolymères triblocs ABA dans lesquels le bloc A représente respectivement moins de 30% en masse du copolymère conduisent à une microséparation de phase en formant des microdomaines comme le montre la figure 3 où l'on observe des domaines discrets de blocs A interconnectés par les blocs B.

Selon l'invention, on met à profit de manière totalement nouvelle et surprenante la microstructuration des copolymères à blocs dans un EPS. Cette microstructuration des copolymères ABA spécifiques mis en oeuvre selon l'invention semble être la cause principale conduisant à des EPS présentant des propriétés mécaniques excellentes.

Les figures 4A et 4B montrent que la plage de température (T) d'utilisation des EPS est inférieure à la Température Ordre-Desordre ($T_{ODT}$) des copolymères à blocs, et qu'elle est combinée à une conductivité ionique élevée.

De préférence, les blocs A sont choisis parmi les blocs de polystyrène (PS), les blocs de poly(méthacrylate d'alkyle en 1 à 10 C), les blocs de poly(acide acrylique), les blocs de poly(acide méthacrylique), les blocs statistiques de poly(styrène/acide acrylique), les blocs statistiques de poly(styrène/acide méthacrylique), les blocs statistiques de poly(méthacrylate d'alkyle en 1 à 10C/acide acrylique) et les blocs statistique de poly(méthacrylate d'alkyle en 1 à

10C/acide méthacrylique).

De préférence, les blocs B sont choisis parmi les blocs de poly(oxyde d'éthylène) (POE), les blocs de poly(oxyde de propylène) (POP) et les blocs de copolymères statistiques POE/POP.

Généralement lesdits poly(éthylène glycol) présentent de 2 à 5000 unités OE.

Avantageusement, le copolymère tribloc ABA de l'EPS selon l'invention est choisi parmi les copolymères suivants :

- les copolymères dans lesquels le bloc B est un bloc de POE et les deux blocs A sont des des blocs de poly(méthacrylate d'alkyle en 1 à 10 C) (Formule (I) );
- les copolymères dans lesquels le bloc B est un bloc de POE et les deux blocs A sont des blocs de poly(acide acrylique) ou bien des blocs de poly(acide méthacrylique) ;
- les copolymères dans lesquels le bloc B est un bloc de POE et les blocs A sont des blocs de polystyrène ;

Le copolymère de l'EPS selon l'invention peut répondre à l'une des formules (I) et (II) suivantes :

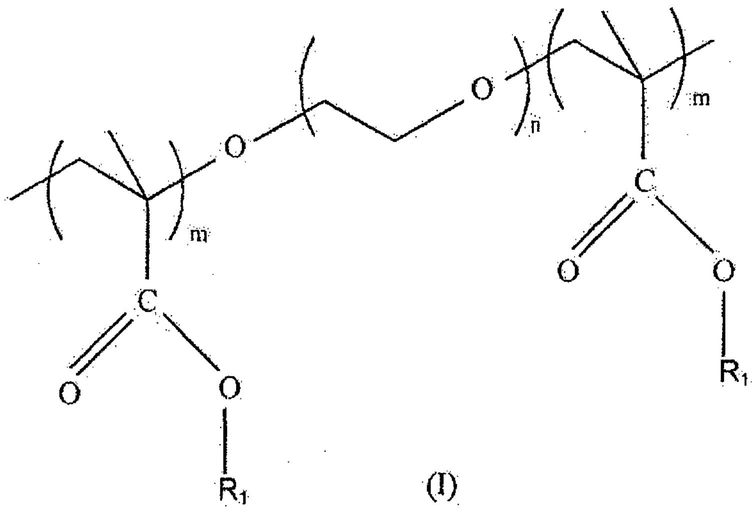

(I)

$R_1$ = groupement alkyle C1 à C10

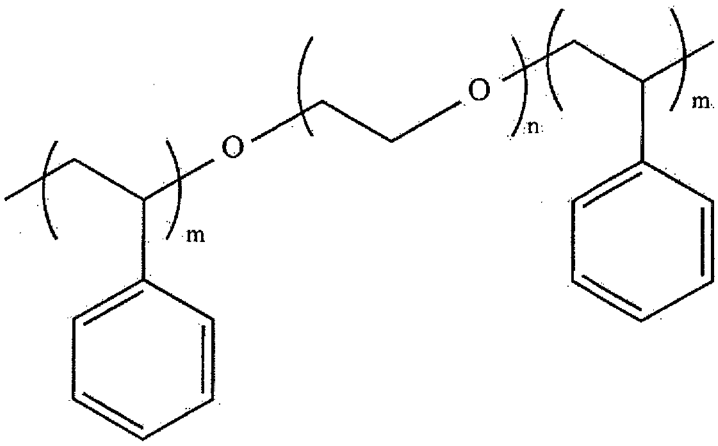

(II)

dans lesquelles m est un nombre entier de 5 à 1000, n est un nombre entier de 2 à 5000, et $R_1$ représente un groupe alkyle de 1 à 10C.

Les copolymères davantage préférés selon l'invention sont les copolymères dans lesquels le bloc B est un bloc de POE et les blocs A sont des blocs de polystyrène, à savoir les copolymères PS-b-POE-b-PS (Formule (II)).

Avantageusement, la proportion de blocs A, est de 15 à 30% en masse de la masse totale du copolymère.

La masse moléculaire moyenne en nombre de chacun des blocs A, par exemple de PS, est généralement de 500 g/mol à 30000 g/mol, de préférence de 1000 g/mol à 10000 g/mol

Les blocs A du copolymère de l'EPS selon l'invention peuvent être un polymère photoréticulable ou thermoréticulable en vue d'améliorer les propriétés mécaniques de l'EPS tout en conservant une bonne conduction ionique de la matrice due au bloc B.

En d'autres termes, les blocs A peuvent être photoréticulés ou thermoréticulés après la nanostructuration et l'élaboration de l'EPS.

La masse moléculaire (moyenne en nombre du bloc B par exemple de POE est généralement de 2000 g/mol à 200000 g/mol, de préférence de 5000 g/mol à 20000 g/mol.

La masse moléculaire moyenne en nombre des copolymères des EPS selon l'invention est généralement de 10000 g/mol à 50000 g/mol.

Les copolymères triblocs ABA mis en oeuvre selon invention peuvent être préparés par des procédés connus.

Les copolymères des EPS selon l'invention en particulier les copolymères PS-POE-PS peuvent être notamment préparés par une méthode, un procédé NMP ou un procédé ATRP.

Dans ce qui suit, on illustre essentiellement la synthèse de copolymères triblocs PS-b-POE-b-PS mais il est bien évident que ces procédés de synthèse peuvent également s'appliquer aux autres copolymères blocs selon l'invention moyennant quelques, notamment préparés par une méthode, un procédé NMP ou un procédé ATRP.

Dans ce qui suit, on illustre essentiellement la synthèse dé copolymères triblocs PS-b-POE-b-PS mais il est bien évident que ces procédés de synthèse peuvent également s'appliquer aux autres copolymères blocs selon l'invention moyennant quelques adaptations à la portée de l'homme du métier dans ce domaine de la technique.

La méthode NMP consiste à synthétiser dans un premier temps une macroalcoxyamine à base de POE puis à polymériser le styrène.

Plusieurs voies de synthèse ont été élaborées. La première consiste en un couplage entre l'alcoxyamine AMA-SG1 (V) et le POE dihydroxylé via la N,N'-Dicyclohexyl-Carbodiimide (DCC) et la 4-Dimethylaminopyridine (DMAP) pour former la macroalcoxyamine difonctionnelle SG1-AMA-POE-AMA-SG1 (VI). Le copolymère tribloc PS-POE-PS est obtenu par polymérisation du styrène en présence de la macroalcoxyamine difonctionnelle à 110°C.

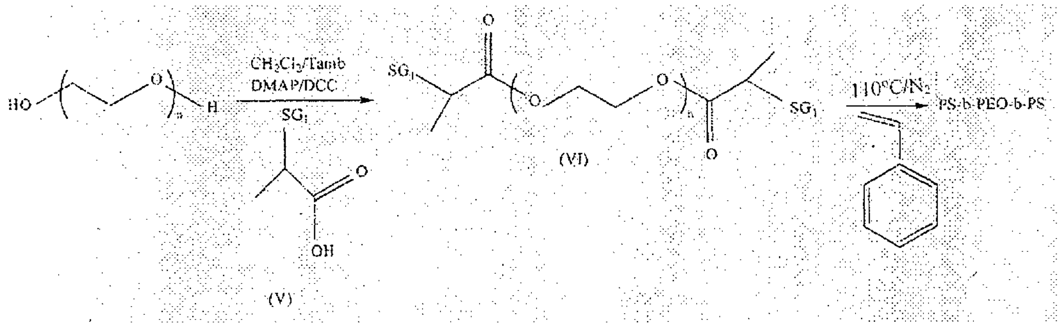


Précisons que SG1 désigne le fragment

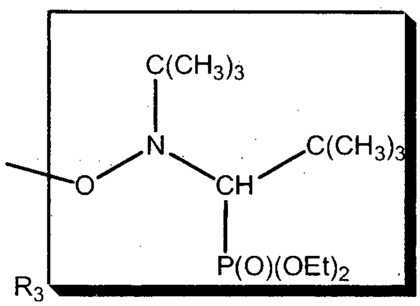
=SG1

La deuxième consiste en un couplage entre un halogénure d'acryloyle et le POE dihydroxylé en présence de triéthylamine pour former un diacrylate de poly(oxyde d'éthylène) (VII). La macroalcoxyamine difonctionnelle SG1-MAMA-POE-MAMA-SG1 (IX) est ensuite obtenue par réaction d'addition 1,2 de la MAMA-SG1 (BlocBuilder™ (VIII))sur le diacrylate de poly(oxyde d'éthylène). Le copolymère tribloc PS-POE-PS est obtenu par polymérisation du styrène en présence de la macroalcoxyamine difonctionnelle à 110°C.

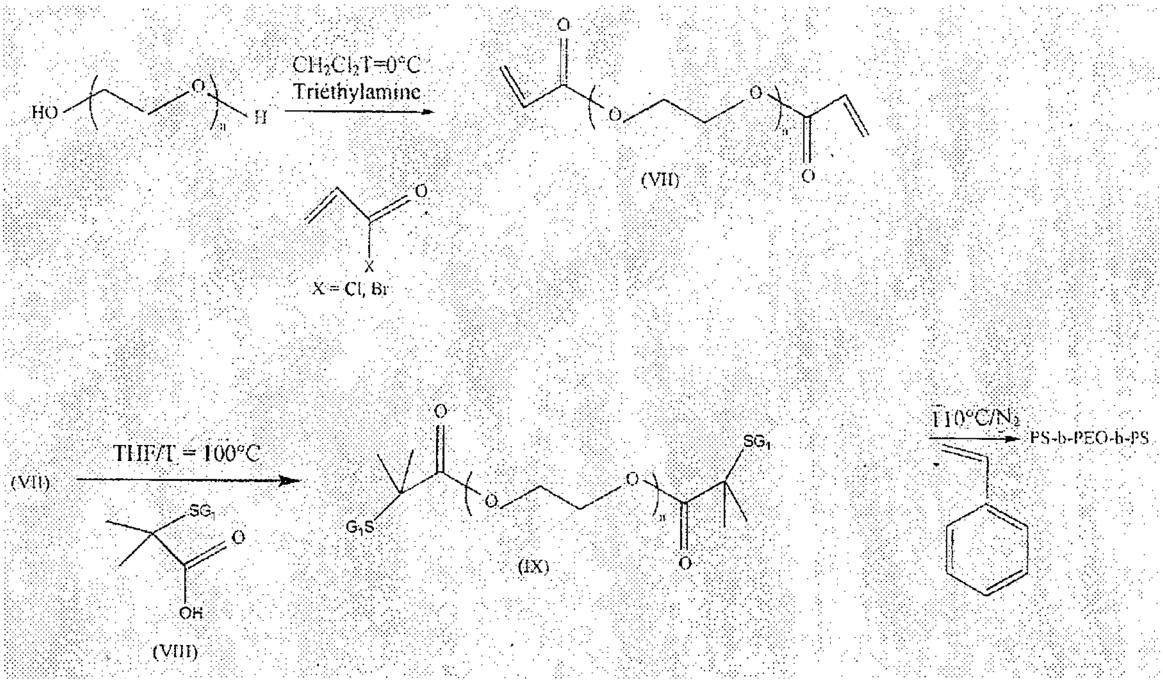


La méthode ATRP consiste à réaliser dans un premier temps le couplage entre le bromure de bromois-obutyryle et le POE dihydroxylé en présence de triéthylamine pour former le macroamorceur difonctionnel Br-POE-Br. Le copolymère tribloc PS-POE-PS est réalisé par amorçage du styrène avec le macroamorceur difonctionnel à 110°C en présence de CuBr et de N-[2-(Dimethylamino)ethyl] N,N',N'-trimethyl-1.2-ethanediamine (PMDETA) comme ligand.

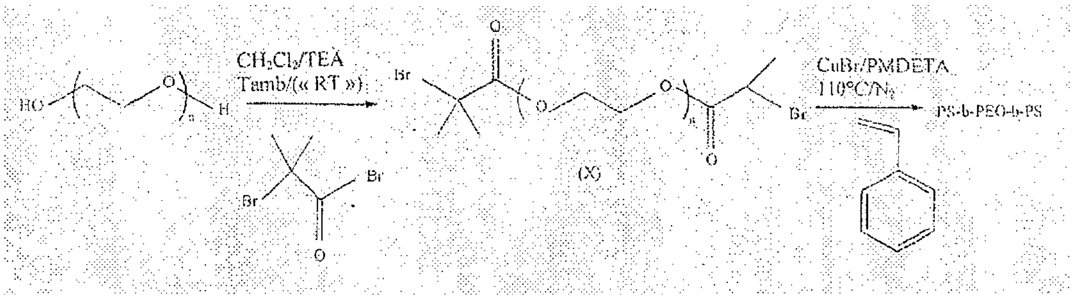


$NaBF_4$, $NaAsF_6$, $KCF_3SO_3$, $KPF_6$, KI, $LiCF_3CO_3$, $NaClO_3$, NaSCN, $KBF_4$, $KPF_6$, $Mg(ClO_4)_2$, et $Mg(BF_4)_2$ et leurs mélanges.

Les sels de lithium sont particulièrement préférés.

La quantité de sel électrolyte ajoutée définie par le rapport [bloc central B tel que OE/Li (en mole), est dans la gamme de 15 à 30.

L'électrolyte polymère solide selon l'invention peut comprendre en outre une charge minérale. Cette charge minérale est choisie généralement parmi les oxydes tels que $SiO_2$, $TiO_2$, $Al_2O_3$ et leurs mélanges. Généralement, cette charge minérale se présente sous la forme de nanoparticules.

La charge minérale représente généralement de 1 à 20%, de préférence 1 à 15% en poids de l'EPS.

Un électrolyte polymère solide selon l'invention peut être préparé par un procédé dans lequel on dissout, dans le rapport [OE]/Li voulu, le copolymère ABA et le sel électrolyte dans un solvant adéquate choisi par exemple parmi le tétrahydrofurane, la methyl-éthyl-cétone, l'acétonitrile, l'éthanol, le diméthyl formamide, le $CH_3CN$, le $CH_2Cl_2$ et leurs mélanges.

La solution obtenue a généralement une concentration de 1 à 20% en poids, par exemple de 5% en poids. On peut ensuite éventuellement ajouter à ladite solution la charge minérale par exemple de $TiO_2$, $SiO_2$, ou $Al_2O_3$ de préférence sous la forme de nanoparticules. $NaBF_4$, $NaAsF_6$, $KCF_3SO_3$, $KPF_6$, KI, $LiCF_3CO_3$, $NaClO_3$, NaSCN, $KBF_4$, $KPF_6$, $Mg(ClO_4)_2$, et $Mg(BF_4)_2$ et leurs mélanges.

Les sels de lithium sont particulièrement préférés.

La quantité de sel électrolyte ajoutée définie par le rapport [bloc central B tel que OE/Li (en mole), est généralement dans la gamme de 0,01 à 200, de préférence de 0,02 à 100, de préférence encore de 15 à 30.

L'électrolyte polymère solide selon l'invention peut comprendre en outre une charge minérale. Cette charge minérale est choisie généralement parmi les oxydes tels que $SiO_2$, $TiO_2$, $Al_2O_3$ et leurs mélanges. Généralement, cette charge minérale se présente sous la forme de nanoparticules.

La charge minérale représente généralement de 1 à 20%, de préférence 1 à 15% en poids de l'EPS.

Un électrolyte polymère solide selon l'invention peut être préparé par un procédé dans lequel on dissout, dans le rapport [OE]/Li voulu, le copolymère ABA et le sel électrolyte dans un solvant adéquate choisi par exemple parmi le tétrahydrofurane, la méthyl-éthyl-cétone, l'acétonitrile, l'éthanol, le diméthyl formamide, le $CH_3CN$, le $CH_2Cl_2$ et leurs mélanges.

La solution obtenue a généralement une concentration de 1 à 20% en poids, par exemple de 5% en poids. On peut ensuite éventuellement ajouter à ladite solution la charge minérale par exemple de $TiO_2$, $SiO_2$, ou $Al_2O_3$ de préférence sous la forme de nanoparticules.

La solution obtenue à l'issue de l'addition éventuelle de la charge minérale a généralement une concentration en poids de 1 à 20% en poids, par exemple de 10% en poids.

On peut ensuite homogénéiser ladite solution pendant une durée généralement de 15 min à 10 heures, par exemple de deux heures et évaporer le solvant par évaporation lente.

Ou bien l'électrolyte solide peut être préparé par un procédé dans lequel le copolymère et le sel d'électrolyte sont mélangés mécaniquement soit à température ambiante, soit avec chauffage.

L'électrolyte polymère solide ainsi préparé peut être ensuite mis sous toute forme voulue, par exemple sous la forme d'une membrane, d'un film, ou d'une feuille d'une épaisseur par exemple de 10 à 200 $\mu$m.

Pour préparer un électrolyte solide sous la forme d'une feuille, film ou membrane, on pourra utiliser toute technique connue telle que l'enduction centrifuge (« spin coating »), le revêtement au rouleau (« roll coating »), l'application au rideau (« curtain coating »), par extrusion, etc...

Par exemple, on dépose une solution de l'EPS contenant un copolymère, un sel électrolyte et éventuellement une charge sur un substrat, on évapore le solvant pour former un film sur ledit substrat puis on sépare le substrat du film ou membrane.

L'EPS peut subir un traitement thermique par exemple à une température de 40 à 100°C pendant une durée de 2 heures à 300 heures, par exemple pendant 96 heures à 50°C.

L'invention concerne également une cellule d'une batterie rechargeable ou accumulateur comprenant une anode et une cathode entre lesquelles se trouve intercalé un électrolyte polymère solide tel que décrit ci-dessus.

De préférence, l'anode est en lithium métallique ou à base de carbone et la cathode est en un composé d'insertion du lithium.

Des modes de réalisation de l'invention vont maintenant être décrits dans ce qui suit, notamment en référence à des exemples donnés à titre illustratif et non limitatif.

Cette description est faite en relation avec les dessins joints, dans lesquels :

- la figure 1 est une vue schématique d'une cellule élémentaire d'un accumulateur au lithium lors de la décharge.
- La figure 2 est une vue schématique d'une cellule élémentaire d'un accumulateur au lithium lors de la charge.
- La figure 3 est une vue schématique qui représente la structure de copolymères blocs ABA dans lesquels le bloc A représente moins de 30% en masse du copolymère.
- La figure 4A est une vue schématique qui représente la microstructuration de copolymères à blocs ABA à une température T supérieure à la température ordre-désordre ($T_{ODT}$) de ces copolymères à blocs ABA.
- La figure 4B est une vue schématique qui représente la microstructuration (à une échelle de 10 à 100 nm) des copolymères à blocs ABA à une température T inférieure à la température ordre-désordre ($T_{ODT}$) de ces copolymères à blocs ABA.
- La figure 5 est une image en AFM (« Atomic Force Microscopy ») du film mince du copolymère PS-POE-PS de l'exemple 3 : 5,6K-10K-5,6K (48% en poids de POE) idem que figure 6
- La figure 6 est une image en AFM d'un film mince du copolymère PS-POE-PS de l'exemple 4 : 1,8K-10-1,8K (75% en poids de POE). L'échelle représentée sur l'image est de 200 nm.
- La figure 7 est un graphique de calorimétrie à balayage différentiel (« Differential Scanning Calorimetry » ou DSC en anglais) qui montre l'influence de la taille, longueur des blocs de POE sur la température de fusion $T_f$ du bloc de POE de divers copolymères : à savoir : un POE-$Br_2$ (Précurseur X, POE difonctionnel) (courbe A) ; un copolymère PS-POE-PS à 75% en masse de POE (courbe B) ; un copolymère PS-POE-PS à 56% de POE (courbe C) ; et un copolymère PS-POE-PS à 25% de POE (courbe en insert).

En abscisse est portée la température T (en °C) et en ordonnée est portée le flux thermique (en W/g).

- La figure 8 est un graphique de calorimétrie à balayage différentiel (DSC) qui montre l'influence de la microstructuration sur la température de fusion $T_f$ du bloc de POE de divers copolymères, PS-POE-PS (9,7K-10K-9,7K). A savoir : un polymère précipité, non nanostructuré ayant subi un premier cycle de chauffe (courbe A), un polymère précipité, non nanostructuré ayant subi un second cycle de chauffe (courbe B) ; et enfin un film microstructuré obtenu par coulée avec du toluène (courbe C).

- La figure 9 est un graphique de calorimétrie à balayage différentiel (DSC) qui montre l'influence de la proportion d'addition du sel de lithium dans un EPS préparé avec le copolymère de l'exemple 4. A savoir : copolymère avec [OE]/Li = 30 (courbe A), copolymère sans Li (courbe B) et copolymère avec [OE]/Li = 15 (courbe C).
- La figure 10 est une vue en coupe schématique d'une cellule de type « Swagelok » utilisée par la mesure de conductivité des films d'EPS.
- La figure 11 est un graphique où est représentée la conductivité de divers films d'EPS à base de copolymère PS-POE-PS (1,8K-10K-1,8K). A savoir un EPS avec un rapport [OE]/[Li] = 30 (courbe avec ■) ; un EPS avec un rapport [OE]/[Li] = 15 avec addition de $TiO_2$ (courbe avec ◇) ; et enfin un POE de référence (masse moléculaire de 20000 à 40000) (courbe avec •).

En ordonnée est portée la conductivité (en $S.cm^{-1}$) et en abscisse est protée 1000/T (en $10^{-3}.K^{-1}$).

- La figure 12 est un graphique où est représentée la conductivité de divers EPS en fonction de la température.

A savoir l'EPS de JANNASH [3] (PFS-PEGPG-PFS) (courbe A), l'EPS de NIITANI [4] (PFS-PEGPG-PFS) (courbe B), et enfin l'EPS selon l'invention (courbe C). En ordonnée est portée la conductivité (log/σ en S/cm) et en abscisse est portée 1000/T ($K^{-1}$).

**Exemple 1 :** Synthèse de la macroalcoxyamine SG1-AMA-POE-AMA-SG1 (VI)

Dans un ballon bicol de 100 mL, 15 g de POE α,ω hydroxylé (Mn = 10000 g/mol), 2,2 g d'alcoxyamine AMA-SG1 (2 équivalents), 0,37 g de DMAP (1 équivalent) sont solubilisés dans 45 mL de dichlorométhane. Le mélange réactionnel est dégazé par bullage d'azote pendant 10 minutes. A l'aide d'une seringue, 1,5 g de DCC (2,4 équivalent) solubilisés dans 5 mL de dichlorométhane sont introduit au goutte à goutte dans le mélange réactionnel à une température de 0°C. On laisse réagir pendant 20 heures, puis le mélange réactionnel est filtré pour éliminer la dicyclohexylurée formée. Ensuite le filtrat est précipité dans de l'éther diéthylique. La macroalcoxyamine SG1-AMA-POE-AMA-SG1 (VI) est récupérée par filtration puis séchée sous vide. Le taux de couplage déterminée par RMN $^1H$ est de 98%.

**Exemple 2 :** Synthèse de la macroalcoxyamine SG1-MAMA- POE-MAMA-SG1 (IX)

Dans un ballon tricol, 10 g de POE α,ω hydroxylé (Mn = 10000 g/mol), 1,4 mL de triéthylamine sont solubilisés dans 40 mL de dichlorométhane. Le mélange réactionnel est dégazé par bullage d'azote pendant 20 minutes. A l'aide d'une ampoule à brome, on introduit goutte à goutte à une température de 0°C, équivalent) dans 10 mL de dichlorométhane. On laisse réagir pendant environ 15 heures. Le mélange réactionnel est filtré pour éliminer le chlorure de triéthylammonium. Le filtrat est lavé 2 fois avec 20 mL d'une solution aqueuse saturée en $NaHCO_3$. La phase organique est précipitée dans de l'éther diéthylique. Le diacrylate de POE est récupéré par filtration puis séchage sous vide. L'analyse RMN $^1H$ montre un taux de couplage supérieur à 95%.

Ensuite, 2 g de POE diacrylate sont introduits dans un « Schlenk » muni d'un « Rotaflo ». 0,16g (4.2mmol) de MAMA-SG1 (VIII) dissout dans 6mL de THF est introduite sur le POE diacrylate. La suspension est désoxygénée par barbotage d'azote pendant 30 minutes. Le « Schlenk » est plongé dans un bain d'huile thermostatée à 100 °C pendant 1 heure. Le THF et évaporé sous vide à température ambiante.

L'analyse RNM $^1H$ montre un taux de couplage radicalaire autour de 85%. L'analyse RNM $^{31}P$ montre la disparition de l'alcoxyamine acide méthacrylique-SG1 (27,4 ppm) et l'apparition de dialcoxyamine à 24, 23ppm (diastéroisomère majoritaire, 69%) et à 24, 6 ppm (diastéréoisomère minoritaire, 31%).

**Exemple 3 :** Synthèse de copolymères à blocs PS-POE-PS de masse molaire (5600 g/mol-10000 g/mol-5600 g/mol)

Dans un ballon tricol de 100 mL, 6,3 g de macroalcoxyamine (VI), 15 g de styrène et 10 g de toluène sont introduit à température ambiante. Après 20 min de dégazage par barbotage d'azote, le milieu réactionnel est porté à 110°C et maintenue à cette température par régulation thermique pendant 5 h. Le copolymère PS-POE-PS est récupéré par précipitation dans de l'éther, filtré et séché sous pression réduite à température ambiante. Le pourcentage massique de POE dans le copolymère est 48% et la $M_n$ = 21200 g/mol.

**Exemple 4 :** Synthèse de copolymères à blocs PS-POE-PS de masse molaire (1800 g/mol-10000 g/mol-1800 g/mol)

Dans un ballon tricol de 100 mL, 6 g de macroalcoxyamine (VI) , 9 g de styrène et 15 g de toluène sont introduit à température ambiante. Après 20 min de dégazage par barbotage d'azote, le milieu réactionnel est porté à 110°C et maintenue à cette température par régulation thermique pendant 150 min. Le copolymère PS-POE-PS est récupéré par précipitation dans de l'éther, filtré et séché sous pression réduite à température ambiante. Le pourcentage massique de POE dans le copolymère est 75% et la $M_n$ = 13600g/mol.

**Exemple 5 :** Préparation d'un film mince du copolymère

Le copolymère préparé dans l'exemple 3 ou dans l'exemple 4 est dissout dans du toluène à une concentration de 10% w/v. La solution est filtrée sur un filtre de 0,45 $\mu$m puis déposé sur un wafer de silicium par spin-coating (200 trs/min pendant 10 s). Le solvant est évaporé lentement sous une cloche à température ambiante. Les films ont une épaisseur de l'ordre de 40 nm. Les analyses d'AFM ont été réalisées sur un AFM Dimension 3100® (Veeco Instruments®) opéré en mode « tapping » à température ambiante.

**Exemple 6**

Les films minces préparés dans l'exemple 5 sont observés par AFM. Les images en AFM (« **Atomic Force Microscopy » en anglais**) des différents films minces obtenus sont présentés aux figures 5 à 6 respectivement pour les copolymères 5,6K-10K-5,6K (48% de POE) et 1,8K-10K-1,8K (75% de POE).

Quelle que soit leur topologie, ces copolymères bien définis s'organisent de façon classique et conforme à la littérature.

Une organisation avec différentes orientations peut être observée, dépendant de l'énergie de surface des blocs et celle du substrat, on observe par exemple des cylindres orientés parallèlement ou perpendiculairement au substrat.

De manière plus précise, le film du copolymère de l'exemple 3 (5,6K-10K-5,6K) avec 48% en poids de POE est lamellaire (Fig. 5), et le film du copolymère de l'exemple 4 (1,8K-10K-1,8) avec 75% en poids de POE présente des cylindres de polystyrène de 18 nm de diamètre (Fig. 6).

Les copolymères préparés dans les exemples 3 à 4 sont également caractérisés par DSC modulée (Figures 7 et 8).

Tous les copolymères présentent deux températures de transition vitreuse $T_g$ distinctes indiquant l'immiscibilité de ces deux blocs.

La $T_g$ des blocs PS (94°C) est proche de celle de l'homoPS ($T_g$ = 100°C), tandis que la $T_g$ du bloc POE est bien supérieure (environ 9°C) à celle de l'homoPOE ($T_g$ ) = -56°C) .

Cela peut être expliqué par le fait que le bloc POE est le bloc central d'un copolymère tribloc, donc ses propriétés seraient différentes de celles d'un homopolymère.

La figure 7 montre que la longueur des blocs PS inhibe la cristallisation du bloc POE et en conséquence indique une diminution de la température de fusion ($T_f$) du POE lorsque la longueur des blocs PS augmente.

Nous observons également l'influence de la nanostructuration sur la température de fusion du POE. Pour un même copolymère, le film « organisé » présente une $T_f$ inférieure à celle d'un film non organisé (Figure 8). On remarque que le traitement thermique facilite l'auto-organisation des chaînes ; en effet, une seconde $T_f$, attribuée aux domaines organisés de l'échantillon, apparaît lors du deuxième cycle de chauffe.

**Exemple 7**

Dans cet exemple, on prépare un électrolyte polymère solide (EPS) avec le copolymère de l'exemple 4 que l'on mélange avec le sel $LiN(CF_3SO_2)_2$ (LITFSI).

Le rapport [EO]/[Li] est de 30.

On fabrique ensuite un film avec l'EPS ainsi préparé de la manière suivante : 0,5 g de copolymère PS-POE-PS (Mn = 13600 g/mol) et 0,08 g (OE/Li = 30) de $LiN(CF_3SO_2)_2$ sont dissous dans 5mL d'un mélange d'acétonitrile-dichlorométhane (60:40 v/v). La solution homogène est ensuite étalée sur un support en Teflon. Le solvant est évaporé à température ambiante pendant 24h, puis à 60°C sous vide pendant 24h. On obtient un film d'électrolyte polymère solide uniforme ayant une épaisseur de l'ordre de 110$\mu$m. Le film est monté sur une cellule de mesure d'impédance de type « Swagelok »

**Exemple 8**

Dans cet exemple, on prépare un électrolyte polymère solide (EPS) avec le polymère de l'exemple 4 que l'on

mélange avec le sel $LiN(CF_3SO_2)_2$. Le rapport [OE]/[Li] est de 15. Les conditions de la fabrication de l'EPS sont analogues à celles de l'exemple 7.

On fabrique ensuite un film avec l'EPS ainsi préparé de la même manière que dans l'exemple 7.

On effectue une analyse DSC des EPS des exemples 7 et 8 : il apparaît clairement que le copolymère avec [OE]/[Li] = 15 présente beaucoup plus de zone cristalline.

**Exemple 9**

On prépare un électrolyte polymère solide et un film de cet EPS dans les mêmes conditions que dans l'exemple 7 mais on ajoute une charge inorganique qui est du $TiO_2$ dans une proportion de 10% de l'électrolyte polymère solide.

Les films d'électrolytes polymères solides (EPS) des exemples 7 à 9 sont montés dans une cellule de mesure de la conductivité de type « Swagelok » telle que celle qui est représentée sur la figure 13. Dans une telle cellule, un film (11) de l'électrolyte polymère solide est placé entre deux pistons (12) en acier inoxydable pourvus d'un ressort (13). Les mesures sont effectuées par spectroscopie d'impédance dans un premier temps vers les basses températures, puis, dans un deuxième temps, vers les plus hautes températures avant de revenir à la température ambiante, la gamme de fréquences de mesure s'étend de 0,1 Hz à 100 kHz. Pour chaque température une période de stabilisation de 24 heures a été utilisée avant d'effectueé la mesure.

La conductivité ionique est calculée par la relation :

$$\sigma = 1/(RxA)$$

où

- 1 est l'épaisseur du film
- A est la surface de la cellule
- R est la résistance.

Les résultats des mesures de la conductivité obtenus sont présentés sur la figure 11 où l'on a porté l'évolution de la conductivité (en $S.cm^{-1}$) en fonction de la température pour les divers films d'EPS étudiés.

Pour une concentration en sel, l'ajout de $TiO_2$ n'améliore guère la conductivité ionique de l'EPS, cependant la présence de $TiO_2$ apporte une tenue mécanique au film de forte concentration en sel (OE/Li = 15).

Sur la plage de température étudiée, il y a un léger phénomène d'hystérésis et un changement de pente pour le film ayant OE/Li = 30. (caractéristique de la fusion des domaines cristallisé de PEO). La conductivité augmente de plus de 2 ordres de grandeur pour le film avec OE/Li = 30 et 1 ordre de grandeur pour le film avec OE/Li = 15 lors du deuxième passage de l'échantillon vers les hautes températures. Cette amélioration est attribuée à la nanostructuration du film facilité par le traitement thermique.

La meilleure conductivité à température ambiante obtenue dans cette étude est égale à $9.10^{-4}$ S/cm pour un EPS composé de copolymères triblocs $PS_{1,8K}$-$POE_{10K}$-$PS_{1,8K}$ (75 wt% POE) dopé au LITFSI à une concentration en sel OE/Li = 15.

Sur la figure 12, on a représenté la conductivité de divers EPS en fonction de la température. A savoir l'EPS de JANNASH [3] (PFS-PEGPG-PFS) (courbe A), l'EPS de NIITANI [4] (PFS-PEGPG-PFS) (courbe B) et enfin l'EPS selon l'invention (courbe C) (EPS de l'exemple 8).

On note que l'EPS selon l'invention présente une conductivité supérieure à celle des EPS de l'art antérieur en particulier à température ambiante (ligne verticale pointillée).

**REFERENCES**

[1] M. Armand, Journal of Power Sources, 4 (1979), 251.

[2] (a) Sadoway, D.R., Block and graft copolymer electrolytes for high-performance, solid-state, lithium batteries, J. Power Sources 2004, 129, 1-3
(b) Ruzette, A.-V.G. ; Soo, P.P ; Sadoway, D.R. ; Mayes, A.M., Melt-Formable Block Copolymer Electrolytes for Lithium Rechargeable Batteries, J. Electrochemical Society 2001, 148, A537-A543
(c) Soo, P.P. ; Huang, B. ; Jang, Y.-I.; Chiang, Y.-M.; Sadoway, D.R. ; A.M., Rubbery Block Copolymer Electrolytes

for Solid-State Rechargeable Lithium Batteries, J. Electrochemical Society 1999, 148, 32-37
(d) Trapa, P.E.; Huang, B. ; Won, Y.-Y. ; Sadoway, D.R. ; Mayes, A.M., Block Copolymer Electrolytes Synthetized by Atom Transfer Radical Polymerization for Solid-State, Thin-Film Lithium Batteries, Electrochemical Solid-State Letters 2002, 5, A85-A88.

[3] K. Jankova ; P. Jannasch ; Hvilsted, S., Ion conducting solid polymer electrolytes based on polypentafluorostyerene-b-polyether-b-polypentafluorostyrene prepared by atom transfer radical polymerization, J. Mater. Chem. 2004, 14, 2902-2908.

[4] (a) Niitani, T. ; Shimada, M. ; Kawamura, K.; Dokko, K.; Rho, Y.H.; Kanamura, K., Synthesis Li+ ion conductive PEO-PSt block copolymer electrolyte with Microphase separation structure, Electrochemical Solid-State Letters 2005, 8, (8), A385-A388
(b) Niitani, T. ; Shimada, M. ; Kawamura, K.; Kanamura, K., Characteristics of new-type solid polymer electrolyte controlling nano-structure, J. Power Sources 2005, 146, 386-390,
(c) Niitani, T.; Muramoto, H, Solid Polymer Electrolyte, EP-A-1 553 117 - Nippon Soda Co.

## Revendications

**1.** Electrolyte Polymère Solide (EPS) comprenant au moins un sel électrolyte et au moins un copolymère tribloc linéaire A-B-A, dans lequel :

- les blocs A sont des polymères préparés à partir d'un ou plusieurs monomères, choisis parmi le styrène, l'o-méthylstyrène, le p-méthylstyrène, le m-t-butoxystyrène, le 2,4-diméthylstyrène, le m-chlorostyrène, le p-chlorostyrène, le 4-carboxystyrène, le vinylanisole, l'acide vinylbenzoïque, la vinylaniline, le vinylnaphtalène, et le 9-vinylanthracène, les méthacrylates d'alkyle de 1 à 10C, le 4-chlorométhylstyrène, le divinylbenzène, le triméthylol propane triacrylate, le tétraméthylolpropane tétraacrylate, les acrylates d'alkyle de 1 à 10C, l'acide acrylique, l'acide méthacrylique ;
- le bloc B est un polymère préparé à partir d'un ou plusieurs monomères choisis parmi l'oxyde d'éthylène (OE) et l'oxyde de propylène (OP),
- la proportion de blocs A du copolymère est de 15 à 30% en masse de la masse totale ' du copolymère,
- la masse moléculaire moyenne en nombre du copolymère tribloc A-B-A est de 10000 à 50000, et
- la quantité de sel électrolyte ajoutée, définie par le rapport [bloc central B tel que OE]/[Li] (en mole) est dans la gamme de 15 à 30.

**2.** Electrolyte polymère solide selon la revendication 1, dans lequel les blocs A sont des homopolymères susceptibles d'être préparés à partir d'un seul monomère ou bien les blocs A sont des copolymères statistiques susceptibles d'être préparés à partir de plusieurs monomères.

**3.** Electrolyte polymère solide selon la revendication 2, dans lequel les blocs A sont des homopolymères susceptibles d'être préparés à partir d'un monomère choisi parmi le styrène, l'o-méthylstyrène, le p-méthylstyrène, le m-t-butoxystyrène, le 2,4-diméthylstyrène, le m-chlorostyrène, le p-chlorostyrène, le 4-carboxystyrène, le vinylanisole, l'acide vinylbenzoïque, la vinylaniline, le vinylnaphtalène, le 9-vinylanthracène, les méthacrylates d'alkyle de 1 à 10C, l'acide acrylique et l'acide méthacrylique.

**4.** Electrolyte polymère solide selon la revendication 2, dans lequel les blocs A sont des copolymères statistiques susceptibles d'être préparés à partir d'un monomère choisi parmi le styrène, l'o-méthylstyrène, le p-méthylstyrène, le m-t-butoxystyrène, le 2,4-diméthylstyrène, le m-chlorostyrène, le p-chlorostyrène, le 4-carboxystyrène, le vinylanisole, l'acide vinylbenzoïque, la vinylaniline, le vinylnaphtalène, le 9-vinylanthracène, les méthacrylates d'alkyle de 1 à 10C, l'acide acrylique et l'acide méthacrylique ; et d'un ou plusieurs autres monomères choisis parmi le 4-chloromethyl styrène, le divinyl benzène, le trimethylolpropane triacrylate, le tetraméthylolpropane tétraacrylate, les acrylates d'alkyle de 1 à 10 C, l'acide acrylique, l'acide méthacrylique,.

**5.** Electrolyte selon l'une quelconque des revendications précédentes, dans lequel le bloc B est un homopolymère ou bien un copolymère statistique.

**6.** Electrolyte polymère solide selon l'une quelconque des revendications précédentes, dans lequel les blocs A sont choisis parmi les blocs de polystyrène (PS), les blocs de poly(méthacrylate d'alkyle en 1 à 10 C), les blocs de

poly(acide acrylique), les blocs de poly(acide méthacrylique), les blocs statistiques de poly(styrène/acide acrylique), les blocs statistiques de poly(styrène/acide méthacrylique), les blocs statistiques de poly(méthacrylate d'alkyle en 1 à 10C/acide acrylique) et les blocs statistiques de poly(méthacrylate d'alkyle/acide méthacrylique).

**7.** Electrolyte polymère solide selon l'une quelconque des revendications précédentes, dans lequel les blocs B sont choisis parmi les blocs de poly(oxyde d'éthylène) (POE), les blocs de poly(oxyde de propylène) (POP) et les blocs de copolymères statistiques.

**8.** Electrolyte polymère solide selon l'une quelconque des revendications précédentes, dans lequel le copolymère tribloc ABA de l'EPS selon l'invention est choisi parmi les copolymères suivants :

- les copolymères dans lesquels le bloc B est un bloc de POE et les deux blocs A sont des blocs de poly(méthacrylate d'alkyle en 1 à 10 C) ;
- les copolymères dans lesquels le bloc B est un bloc de POE et les deux blocs A sont des blocs de poly(acide acrylique) ou bien des blocs de poly(acide méthacrylique) ;
- les copolymères dans lesquels le bloc B est un bloc de POE et les blocs A sont des blocs de polystyrène.

**9.** Electrolyte polymère solide selon l'une quelconque des revendications précédentes, dans lequel le copolymère tribloc A-B-A répond à l'une des formules (I) et (II) suivantes :

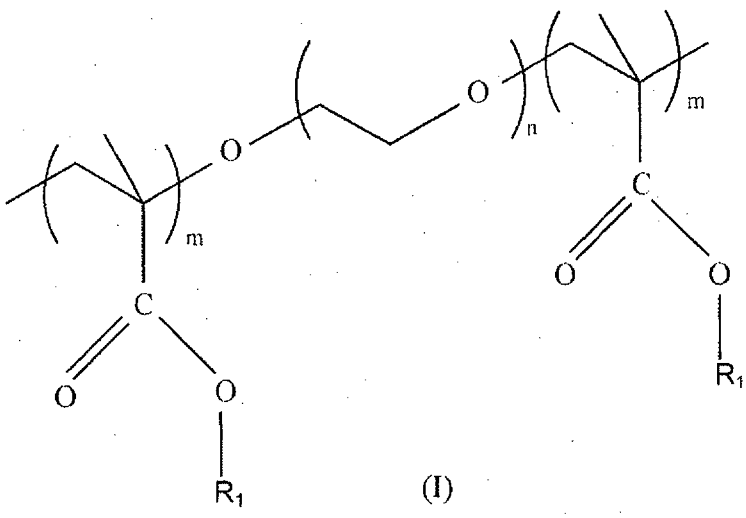

(I)

$R_1$ = groupement alkyle C1 à C10

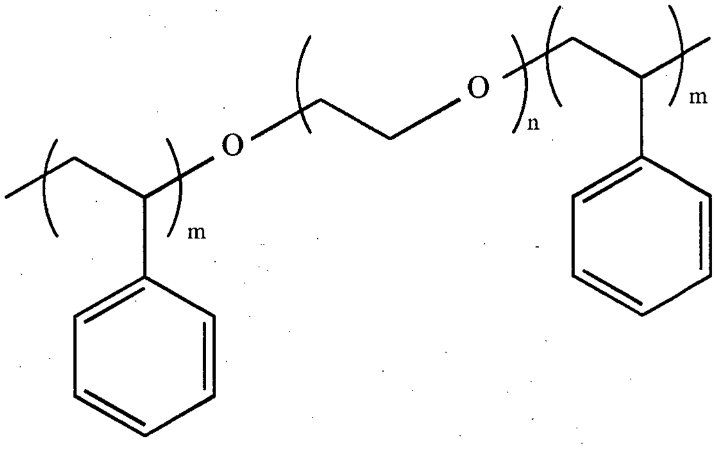

(II)

dans lesquelles m est un nombre entier de 5 à 1000, n est un nombre entier de 2 à 5000, et $R_1$ représente un groupe alkyle de 1 à 10C.

**10.** Electrolyte polymère solide selon l'une quelconque des revendications précédentes, dans lequel le copolymère A-B-A est un copolymère PS-b-POE-b-PS.

**11.** Electrolyte polymère solide selon l'une quelconque des revendications précédentes, dans lequel la masse moléculaire moyenne en nombre de chacun des blocs A du copolymère, est de 500 à 30000, de préférence de 1000 à 10000 g/mol, de préférence encore de 1500 à 3000 g/mol.

**12.** Electrolyte polymère solide selon l'une quelconque des revendications précédentes, dans lequel la masse moléculaire moyenne en nombre du bloc B est de 5000 à 20000, de préférence encore de 8000 à 15000 g/mol.

**13.** Electrolyte polymère solide selon l'une quelconque des revendications précédentes, dans lequel les blocs A peuvent être photoréticulés ou thermoréticulés après la nanostructuration et l'élaboration de l'EPS.

**14.** Electrolyte polymère solide selon l'une quelconque des revendications précédentes comprenant un seul copolymère ABA ; ou bien un mélange de plusieurs copolymères ABA, chacun avec des motifs structuraux différents ; ou un mélange d'au moins un copolymère tribloc linéaire ABA et d'au moins un autre homopolymère et/ou copolymère.

**15.** Electrolyte polymère solide selon la revendication 14, dans lequel ledit autre homopolymère ou copolymère est choisi parmi les PEO, les PS, les PS-b-PEO.

**16.** Electrolyte polymère solide selon la revendication 15 comprenant un copolymère tribloc linéaire ABA et un PEO.

**17.** Electrolyte polymère solide selon l'une quelconque des revendications précédentes, dans lequel le sel électrolyte est choisi parmi les sels de métaux alcalins, les sels d'ammonium quaternaire tels que $(CH_3)_4NBF_6$, les sels de phosphonium quaternaires tels que $(CH_3)_4PBF_6$, les sels de métaux de transition tels que $AgClO_4$, ou les acides tels que l'acide chlorhydrique, l'acide perchlorique, l'acide fluoroborique, l'acide phosphorique, et l'acide sulfurique.

**18.** Electrolyte polymère solide selon la revendication 17, dans lequel le sel électrolyte est choisi parmi $LiCF_3SO_3$, $LiB(C_2O_4)_2$ $LiN(CF_3SO_2)_2$, $LiC(CF_3SO_2)_3$, $LiC(CH_3)(CF_3SO_2)_2$, $LiCH(CF_3SO_2)_2$, $LiCH_2(CF_3SO_2)$, $LiC_2F_5SO_3$, $LiN(C_2F_5SO_2)_2$, $LiN(CF_3SO_2)$, $LiB(CF_3SO_2)_2$, $LiPF_6$, $LiSbF_6$, $LiClO_4$, LiSCN, $LiAsF_6$, $NaCF_3SO_3$, $NaPF_6$, $NaClO_4$, NaI, $NaBF_4$, $NaAsF_6$, $KCF_3SO_3$, $KPF_6$, KI, $LiCF_3CO_3$, $NaClO_3$, NaSCN, $KBF_4$, $KPF_6$, $Mg(ClO_4)_2$, et $Mg(BF_4)_2$ et leurs mélanges.

**19.** Electrolyte polymère solide selon l'une quelconque des revendications précédentes comprenant en outre une charge minérale.

**20.** Electrolyte polymère solide selon la revendication 19, dans lequel la charge minérale est choisie parmi les oxydes tels que $SiO_2$, $TiO_2$, $Al_2O_3$ et leurs mélanges.

**21.** Electrolyte polymère solide selon l'une quelconque des revendications 19 et 20, dans lequel la charge minérale représente de 1 à 20% en poids de l'électrolyte polymère solide.

**22.** Electrolyte polymère solide selon l'une quelconque des revendications précédentes qui se présente sous la forme d'une feuille, d'une membrane ou d'un film.

**23.** Electrolyte polymère solide selon l'une quelconque des revendications précédentes qui est en outre soumis à un traitement thermique à une température de 40 à 100°C pendant une durée de 2 à 300 heures.

**24.** Cellule d'une batterie rechargeable ou accumulateur comprenant une anode et une cathode entre lesquelles se trouve intercalé un électrolyte polymère solide selon l'une quelconque des revendications 1 à 22.

**25.** Cellule selon la revendication 24, dans lequel l'anode est en lithium métallique ou à base de carbone et la cathode est en un composé d'insertion du lithium.

**Patentansprüche**

**1.** Polymerer Festelektrolyt (SPE, Solid Polymeric Electrolyte), der mindestens ein Elektrolytsalz und mindestens ein lineares Dreiblock-Copolymer A-B-A umfasst, bei dem:

- die Blöcke A Polymere sind, die ausgehend von einem oder mehreren Monomeren gebildet werden, die ausgewählt sind unter: Styrol, o-Methylstyrol, p-Methylstyrol, m-tert-Butoxystyrol, 2,4-Dimethylstyrol, m-Chlorstyrol, p-Chlorstyrol, 4-Carboxystyrol, Vinylanisol, Vinylbenzoesäure, Vinylanilin, Vinylnaphthalin, 9-Vinylanthracen, Alkylmethacrylaten, bei denen die Alkylgruppe 1 bis 10 C aufweist, 4-Chlormethylstyrol, Divinylbenzol, Trimethylolpropantriacrylat, Tetramethylolpropantetraacrylat, Alkylacrylaten, bei denen die Alkylgruppe 1 bis 10C aufweist, Acrylsäure, Methacrylsäure;
- der Block B ist ein Polymer, das ausgehend von einem oder mehreren Monomeren gebildet wird, die unter Ethylenoxid (EO) und Propylenoxid (PO) ausgewählt sind;
- wobei der Anteil der Blöcke A des Copolymers 15 bis 30 Gew.-% der Gesamtmasse des Copolymers ausmacht,
- die zahlenmittlere Molmasse des Dreiblock-Copolymers A-B-A 10.000 bis 50.000 beträgt, und
- der als Verhältnis [zentraler Block B, wie z. B. EO]/[Li] (in Mol) definierte Mengenanteil des eingebrachten Elektrolytsalzes im Bereich von 15 bis 30 liegt.

**2.** Polymerer Festelektrolyt nach Anspruch 1, worin die Blöcke A Homopolymere sind, die ausgehend von nur einem Monomer hergestellt werden können, oder die Blöcke A statistische Copolymere sind, die ausgehend von mehreren Monomeren hergestellt werden können.

**3.** Polymerer Festelektrolyt nach Anspruch 2, worin die Blöcke A Homopolymere sind, die ausgehend von einem Monomer hergestellt werden können, das unter Styrol, o-Methylstyrol, p-Methylstyrol, m-tert-Butoxystyrol, 2,4-Dimethylstyrol, m-Chlorstyrol, p-Chlorstyrol, 4-Carboxystyrol, Vinylanisol, Vinylbenzoesäure, Vinylanilin, Vinylnaphthalin, 9-Vinylanthracen, Alkylmethacrylaten, bei denen die Alkylgruppe 1 bis 10C aufweist, Acrylsäure und Methacrylsäure ausgewählt ist.

**4.** Polymerer Festelektrolyt nach Anspruch 2, worin die Blöcke A statistische Copolymere sind, die ausgehend von einem Monomer, das unter Styrol, o-Methylstyrol, p-Methylstyrol, m-tert-Butoxystyrol, 2,4-Dimethylstyrol, m-Chlorstyrol, p-Chlorstyrol, 4-Carboxystyrol, Vinylanisol, Vinylbenzoesäure, Vinylanilin, Vinylnaphthalin, 9-Vinylanthracen, Alkylmethacrylaten, bei denen die Alkylgruppe 1 bis 10C aufweist, Acrylsäure und Methacrylsäure ausgewählt ist, und einem oder mehreren weiteren Monomeren hergestellt werden können, die unter 4-Chlormethylstyrol, Divinylbenzol, Trimethylolpropantriacrylat, Tetramethylolpropantetraacrylat, Alkylacrylaten, bei denen die Alkylgruppe 1 bis 10C aufweist, Acrylsäure und Methacrylsäure ausgewählt sind.

**5.** Elektrolyt nach einem der vorhergehenden Ansprüche, worin der Block B ein Homopolymer oder ein statistisches Copolymer bedeutet.

**6.** Polymerer Festelektrolyt nach einem der vorhergehenden Ansprüche, worin die Blöcke A unter Polystyrol-(PS)-Blöcken, Poly(alkyl($C_{1-10}$)methacrylat)-Blöcken, Poly(acrylsäure)-Blöcken, Poly(methacrylsäure)-Blöcken, statistischen Poly(styrol/acrylsäure)-Blöcken, statistischen Poly(styrol/methacrylsäure)-Blöcken, statistischen Poly(alkyl($C_{1-10}$)methacrylat/acrylsäure)-Blöcken und statistischen Poly(alkylmethacrylat/methacrylsäure)-Blöcken ausgewählt sind.

**7.** Polymerer Festelektrolyt nach einem der vorhergehenden Ansprüche, worin die Blöcke B unter Poly(ethylenoxid) (PEO)-Blöcken, Poly(propylenoxid) (PPO)-Blöcken und Blöcken statistischer Copolymere ausgewählt sind.

**8.** Polymerer Festelektrolyt nach einem der vorhergehenden Ansprüche, worin das Dreiblock-Copolymer A-B-A des erfindungsgemäßen SPE unter den folgenden Copolymeren ausgewählt ist:

- Copolymeren, bei denen der Block B ein PEO-Block ist und die beiden Blöcke A Poly(alkyl($C_{1-10}$)methacrylat)-Blöcke sind;
- Copolymeren, bei denen der Block B ein PEO-Block ist und die beiden Blöcke A Poly(acrylsäure)-Blöcke oder Poly(methacrylsäure)-Blöcke sind;
- Copolymeren, bei denen der Block B ein PEO-Block ist und die Blöcke A Polystyrol-Blöcke sind.

**9.** Polymerer Festelektrolyt nach einem der vorhergehenden Ansprüche, worin das Dreiblock-Copolymer A-B-A einer der folgenden Formeln (I) und (II) entspricht:

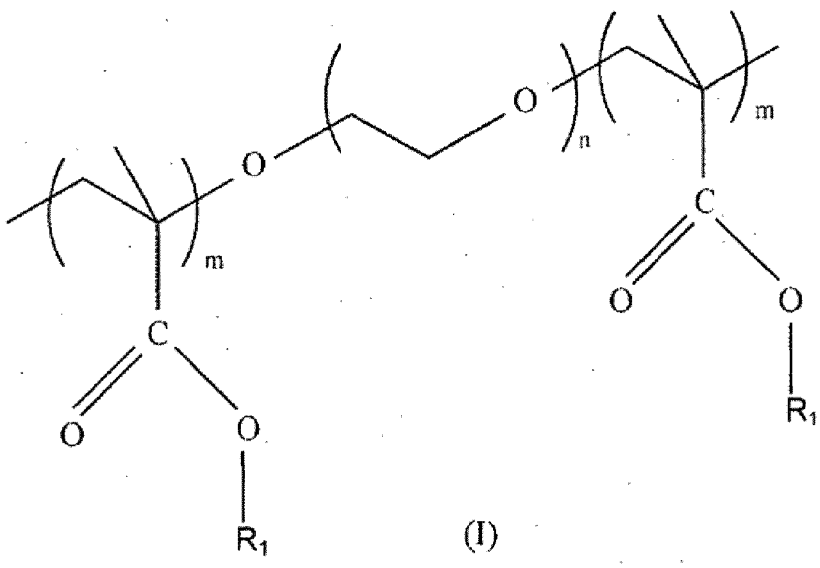

(I)

$R_1$ = eine $C_{1-10}$-Alkylgruppe

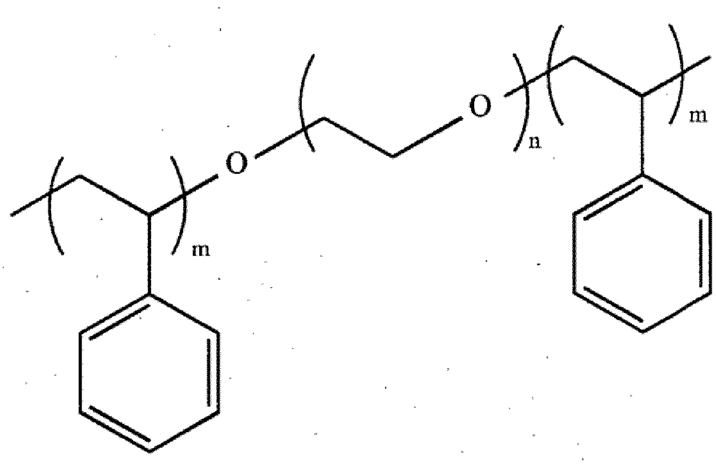

(II)

worin m eine ganze Zahl von 5 bis 1.000 und n eine ganze Zahl von 2 bis 5.000 bedeutet und $R_1$ eine Alkylgruppe mit 1 bis 10 Kohlenstoffatomen ist.

**10.** Polymerer Festelektrolyt nach einem der vorhergehenden Ansprüche, worin das Copolymer A-B-A ein PS-b-PEO-b-PS-Copolymer ist.

**11.** Polymerer Festelektrolyt nach einem der vorhergehenden Ansprüche, worin die zahlenmittlere Molmasse jeden Blockes A des Copolymers 500 bis 30.000, vorzugsweise 1.000 bis 10.000 g/mol und noch bevorzugter 1.500 bis 3.000 g/mol ausmacht.

**12.** Polymerer Festelektrolyt nach einem der vorhergehenden Ansprüche, worin die zahlenmittlere Molmasse des Blockes B 5.000 bis 20.000 und noch bevorzugter 8.000 bis 15.000 g/mol ausmacht.

**13.** Polymerer Festelektrolyt nach einem der vorhergehenden Ansprüche, worin die Blöcke A nach der Nanostrukturierung und Erstellung des SPEs photovernetzt oder thermovernetzt werden können.

**14.** Polymerer Festelektrolyt nach einem der vorhergehenden Ansprüche, der nur ein einziges Copolymer ABA; oder ein Gemisch aus mehreren Copolymeren ABA, jedes mit unterschiedlichen Struktureinheiten; oder ein Gemisch aus mindestens einem linearen Dreiblock-Copolymer ABA und mindestens einem weiteren Homopolymer und/oder Copolymer aufweist.

**15.** Polymerer Festelektrolyt nach Anspruch 14, worin das weitere Homopolymer oder Copolymer unter den PEO, den PS, den PS-b-PEO ausgewählt ist.

**16.** Polymerer Festelektrolyt nach Anspruch 15, der ein lineares Dreiblock-Copolymer ABA und ein PEO umfasst.

**17.** Polymerer Festelektrolyt nach einem der vorhergehenden Ansprüche, worin das Elektrolytsalz unter den Alkalimetallsalzen, quartären Ammoniumsalzen, wie $(CH_3)_4NBF_6$, quartären Phosphoniumsalzen, wie $(CH_3)_4PBF_6$, Übergangsmetallsalzen, wie $AgClO_4$, oder Säuren, wie Salzsäure, Perchlorsäure, Fluorborsäure, Phosphorsäure und Schwefelsäure, ausgewählt sind.

**18.** Polymerer Festelektrolyt nach Anspruch 17, worin das Elektrolytsalz unter $LiCF_3SO_3$, $LiB(C_2O_4)_2$, $LiN(CF_3SO_2)_2$, $LiC(CF_3SO_2)_3$, $LiC(CH_3)(CF_3SO_2)_2$, $LiCH(CF_3SO_2)_2$, $LiCH_2(CF_3SO_2)$, $LiC_2F_5SO_3$, $LiN(C_2F_5SO_2)_2$, $LiN(CF_3SO_2)$, $LiB(CF_3SO_2)_2$, $LiPF_6$, $LiSbF_6$, $LiClO_4$, LiSCN, $LiAsF_6$, $NaCF_3SO_3$, $NaPF_6$, $NaClO_4$, NaI, $NaBF_4$, $NaAsF_6$, $KCF_3SO_3$, $KPF_6$, KI, $LiCF_3CO_3$, $NaClO_3$ NaSCN, $KBF_4$, $KPF_6$, $Mg(ClO_4)$ und $Mg(BF_4)_2$ und deren Gemischen ausgewählt ist.

**19.** Polymerer Festelektrolyt nach einem der vorhergehenden Ansprüche, der ferner einen anorganischen Füllstoff enthält.

**20.** Polymerer Festelektrolyt nach Anspruch 19, worin der anorganische Füllstoff unter den Oxiden, wie $SiO_2$, $TiO_2$, $Al_2O_3$, und deren Gemischen ausgewählt ist.

**21.** Polymerer Festelektrolyt nach einem der Ansprüche 19 und 20, worin der anorganische Füllstoff 1 bis 20 Gew.-% des polymeren Festelektrolyten ausmacht.

**22.** Polymerer Festelektrolyt nach einem der vorhergehenden Ansprüche, der als Folie, Membran oder Film vorliegt.

**23.** Polymerer Festelektrolyt nach einem der vorhergehenden Ansprüche, der während einer Zeitdauer von 2 bis 300 Stunden einer thermischen Behandlung bei einer Temperatur von 40 bis 100 °C unterzogen wird.

**24.** Zelle einer wiederaufladbaren Batterie oder Akkumulator mit einer Anode und einer Kathode, zwischen denen sich ein polymerer Festelektrolyt nach einem der Ansprüche 1 bis 22 befindet.

**25.** Zelle nach Anspruch 24, worin die Anode aus Lithiummetall besteht oder auf Kohlenstoff basiert und die Kathode eine Lithium-Einlagerungsverbindung ist.

## Claims

**1.** Solid polymer electrolyte (SPE) comprising at least one electrolyte salt and at least one linear triblock copolymer A-B-A, in which:

- the blocks A are polymers prepared from one or more monomers chosen from styrene, o-methylstyrene, p-methylstyrene, m-t-butoxystyrene, 2,4-dimethylstyrene, m-chlorostyrene, p-chlorostyrene, 4-carboxystyrene, vinylanisole, vinylbenzoic acid, vinylaniline, vinylnaphthalene, and 9-vinylanthracene, 1 to 10C alkyl methacrylates, 4-chloromethylstyrene, divinylbenzene, trimethylolpropane triacrylate, tetramethylolpropane tetraacrylate, 1 to 10C alkyl acrylates, acrylic acid and methacrylic acid;
- the block B is a polymer prepared from one or more monomers chosen from ethylene oxide (EO) and propylene oxide (PO),
- the proportion of blocks A of the copolymer is from 10% to 35% by mass relative to the total mass of the copolymer,
- the number-average molecular mass of the triblock copolymer A-B-A is from 10 000 to 50 000 g/mol, and
- the amount of electrolyte salt added, defined by the ratio [central block B such as EO]/[Li] in moles is in the range from 15 to 30.

**2.** Solid polymer electrolyte according to Claim 1, in which the blocks A are homopolymers that may be prepared from a single monomer, or alternatively the blocks A are random copolymers that may be prepared from several monomers.

**3.** Solid polymer electrolyte according to Claim 2, in which the blocks A are homopolymers that may be prepared from a monomer chosen from styrene, o-methylstyrene, p-methylstyrene, m-t-butoxystyrene, 2,4-dimethylstyrene, m-chlorostyrene, p-chlorostyrene, 4-carboxystyrene, vinylanisole, vinylbenzoic acid, vinylaniline, vinylnaphthalene, 9-vinylanthracene, 1 to 10C alkyl methacrylates, acrylic acid and methacrylic acid.

**4.** Solid polymer electrolyte according to Claim 2, in which the blocks A are random copolymers that may be prepared from a monomer chosen from styrene, o-methylstyrene, p-methylstyrene, m-t-butoxystyrene, 2,4-dimethylstyrene, m-chlorostyrene, p-chlorostyrene, 4-carboxystyrene, vinylanisole, vinylbenzoic acid, vinylaniline, vinylnaphthalene, 9-vinylanthracene, 1 to 10C alkyl methacrylates, acrylic acid and methacrylic acid; and from one or more other monomers chosen from 4-chloromethylstyrene, divinylbenzene, trimethylolpropane triacrylate, tetramethylolpropane tetraacrylate, 1 to 10C alkyl acrylates, acrylic acid and methacrylic acid.

**5.** Electrolyte according to any one of the preceding claims, in which the block B is a homopolymer or a random copolymer.

**6.** Solid polymer electrolyte according to any one of the preceding claims, in which the blocks A are chosen from polystyrene (PS) blocks, poly(1 to 10C alkyl methacrylate) blocks, poly(acrylic acid) blocks, poly(methacrylic acid) blocks, random poly(styrene/acrylic acid) blocks, random poly(styrene/methacrylic acid) blocks, random poly(1 to 10C alkyl methacrylate/acrylic acid) blocks and random poly(alkyl methacrylate/methacrylic acid) blocks.

7. Solid polymer electrolyte according to any one of the preceding claims, in which the blocks B are chosen from poly(ethylene oxide) (PEO) blocks, poly(propylene oxide) (PPO) blocks and random PEO/PPO copolymer blocks.

8. Solid polymer electrolyte according to any one of the preceding claims, in which the ABA triblock copolymer of the SPE according to the invention is chosen from the following copolymers:

- copolymers in which the block B is a PEO block and the two blocks A are poly(1 to 10C alkyl methacrylate) blocks;
- copolymers in which the block B is a PEO block and the two blocks A are poly(acrylic acid) blocks or poly(methacrylic acid) blocks;
- copolymers in which the block B is a PEO block and the blocks A are polystyrene blocks.

9. Solid polymer electrolyte according to any one of the preceding claims, in which the triblock copolymer A-B-A correspond to one of the formulae (I) and (II) below:

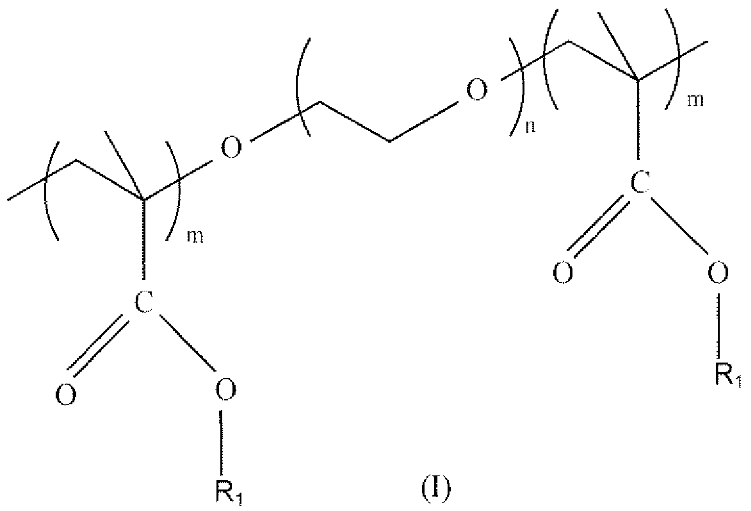

(I)

$R_1$ = C1 to C10 alkyl group

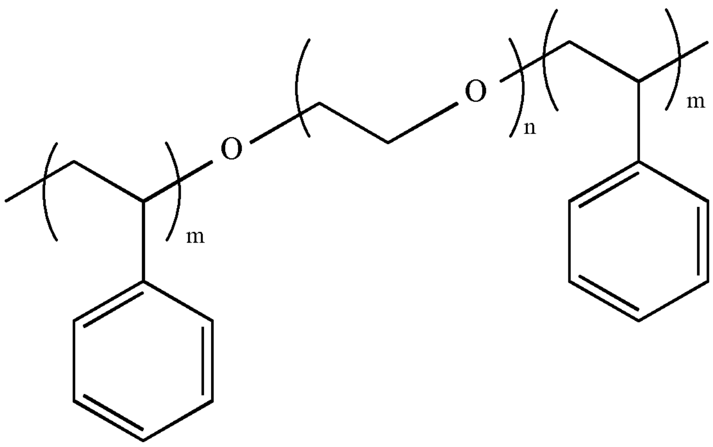

(II)

in which m is an integer from 5 to 1000, n is an integer from 2 to 5000 and $R_1$ represents a 1 to 10C alkyl group.

10. Solid polymer electrolyte according to any one of the preceding claims, in which the copolymer A-B-A is a copolymer PS-b-PEO-b-PS.

**11.** Solid polymer electrolyte according to any one of the preceding claims, in which the number-average molecular mass of each of the blocks A of the copolymer is from 500 to 30 000, preferably from 1000 to 10 000 g/mol and more preferably from 1500 to 3000 g/mol.

**12.** Solid polymer electrolyte according to any one of the preceding claims, in which the number-average molecular mass of the block B is from 5000 to 20 000 g/mol and more preferably from 8000 to 15 000 g/mol.

**13.** Solid polymer electrolyte according to any one of the preceding claims, in which the blocks A may be photo-cured or heat-cured after the nanostructuring and production of the SPE.

**14.** Solid polymer electrolyte according to any one of the preceding claims, comprising a single ABA copolymer; or alternatively a mixture of several ABA copolymers, each with different structural units; or a mixture of at least one linear ABA triblock copolymer and of at least one other homopolymer and/or copolymer.

**15.** Solid polymer electrolyte according to Claim 14, in which the said other homopolymer or copolymer is chosen from PEOs, PSs and PSb-PEOs.

**16.** Solid polymer electrolyte according to Claim 15, comprising a linear ABA triblock copolymer and a PEO.

**17.** Solid polymer electrolyte according to any one of the preceding claims, in which the electrolyte salt is chosen from alkali metal salts, quaternary ammonium salts such as $(CH_3)_4NBF_6$, quaternary phosphonium salts such as $(CH_3)_4PBF_6$, transition metal salts such as $AgClO_4$, or acids such as: hydrochloric acid, perchloric acid, fluoroboric acid, phosphoric acid and sulfuric acid.

**18.** Solid polymer electrolyte according to Claim 17, in which the electrolyte salt is chosen from $LiCF_3SO_3$, $LiB(C_2O_4)_2$ $LiN(CF_3SO_2)_2$, $LiC(CF_3SO_2)_3$, $LiC(CH_3)(CF_3SO_2)_2$, $LiCH(CF_3SO_2)_2$, $LiCH_2(CF_3SO_2)$, $LiC_2F_5SO_3$, $LiN(C_2F_5SO_2)_2$, $Li(CF_3SO_2)$, $LiB(CF_3SO_2)_2$, $LiPF_6$, $LiSbF_6$, $LiClO_4$, LiSCN, $LiAsF_6$, $NaCF_3SO_3$, $NaPF_6$, $NaClO_4$, NaI, $NaBF_4$, $NaAsF_6$, $KCF_3SO_3$, $KPF_6$, KI, $LiCF_3CO_3$, $NaClO_3$, NaSCN, $KBF_4$, $KPF_6$, $Mg(ClO_4)_2$, and $Mg(BF_4)_2$, and mixtures thereof.

**19.** Solid polymer electrolyte according to any one of the preceding claims, also comprising a mineral filler.

**20.** Solid polymer electrolyte according to Claim 19, in which the mineral filler is chosen from oxides such as $SiO_2$, $TiO_2$ and $Al_2O_3$, and mixtures thereof.

**21.** Solid polymer electrolyte according to either of Claims 19 and 20, in which the mineral filler represents from 1% to 20% by weight of the solid polymer electrolyte.

**22.** Solid polymer electrolyte according to any one of the preceding claims, which is in the form of a sheet, a membrane or a film.

**23.** Solid polymer electrolyte according to any one of the preceding claims, which is further subjected to a heat treatment at a temperature of from 40 to 100°C for a time of from 2 to 300 hours.

**24.** Rechargeable battery or accumulator cell comprising an anode and a cathode between which is intercalated a solid polymer electrolyte according to any one of Claims 1 to 22.

**25.** Cell according to Claim 24, in which the anode is made of lithium metal or based on carbon and the cathode is made of a lithium insertion compound.

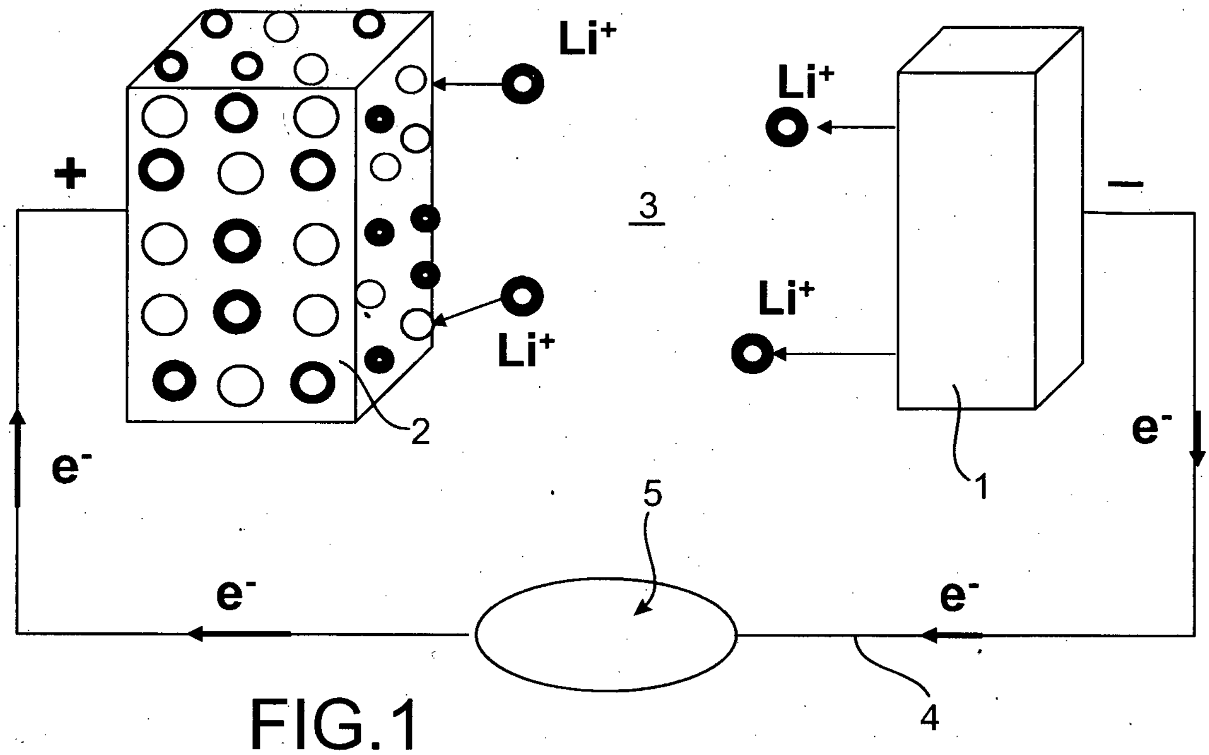


FIG.1

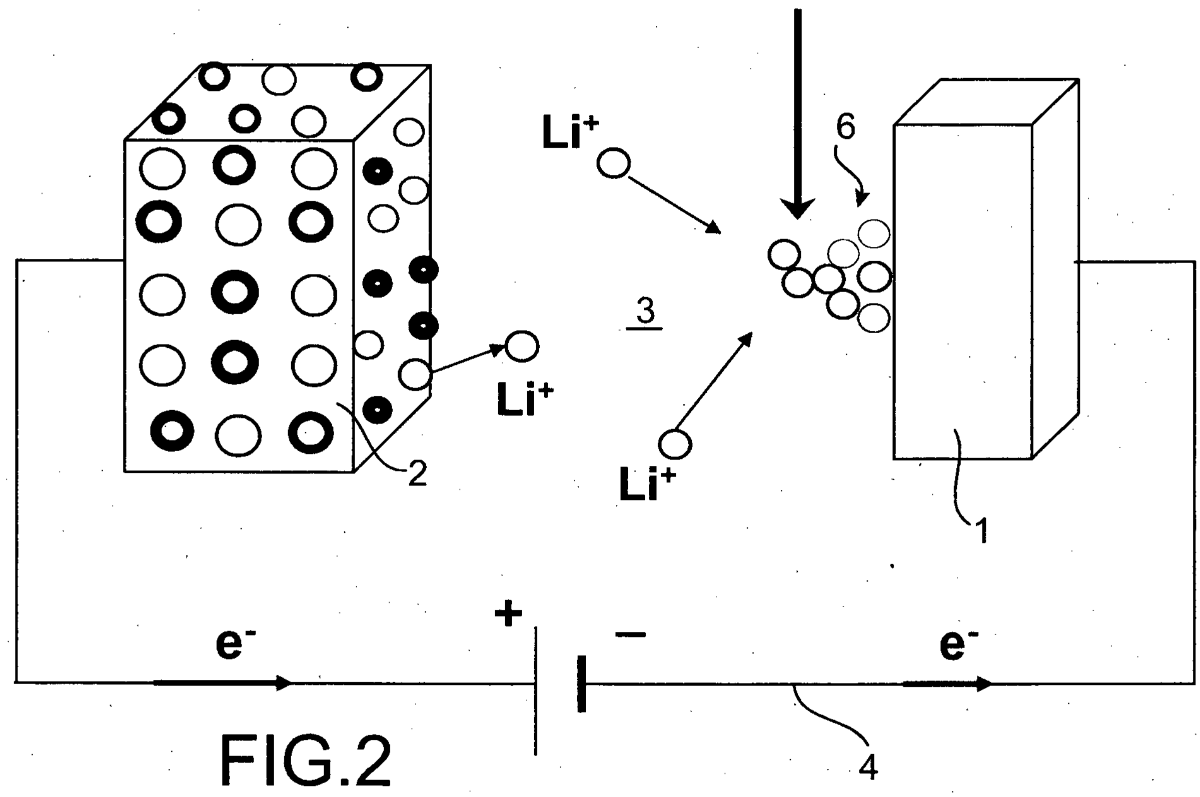


FIG.2

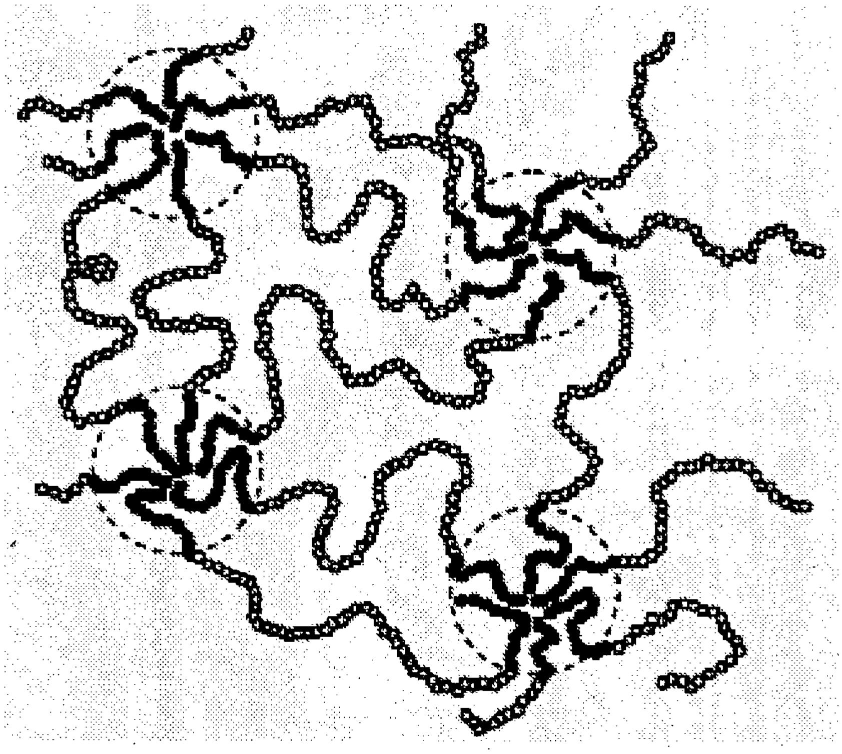

FIG. 3

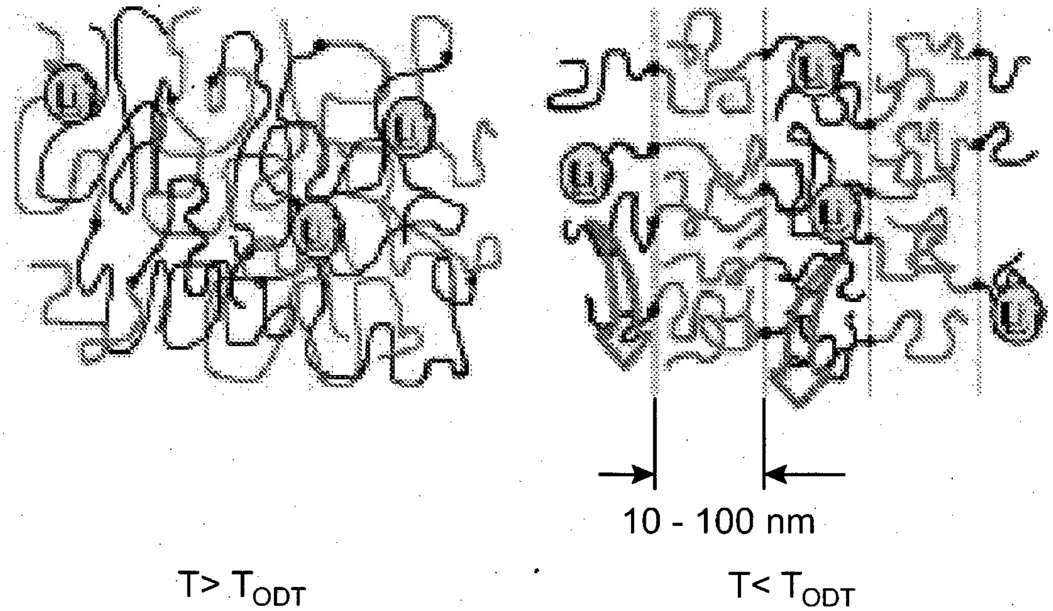


FIG. 4A FIG. 4B

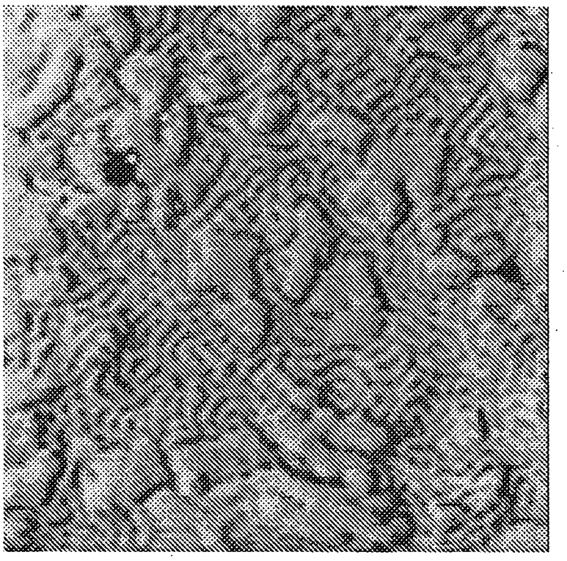

5.6K-10K-5.6K
48pds % POE

FIG.5

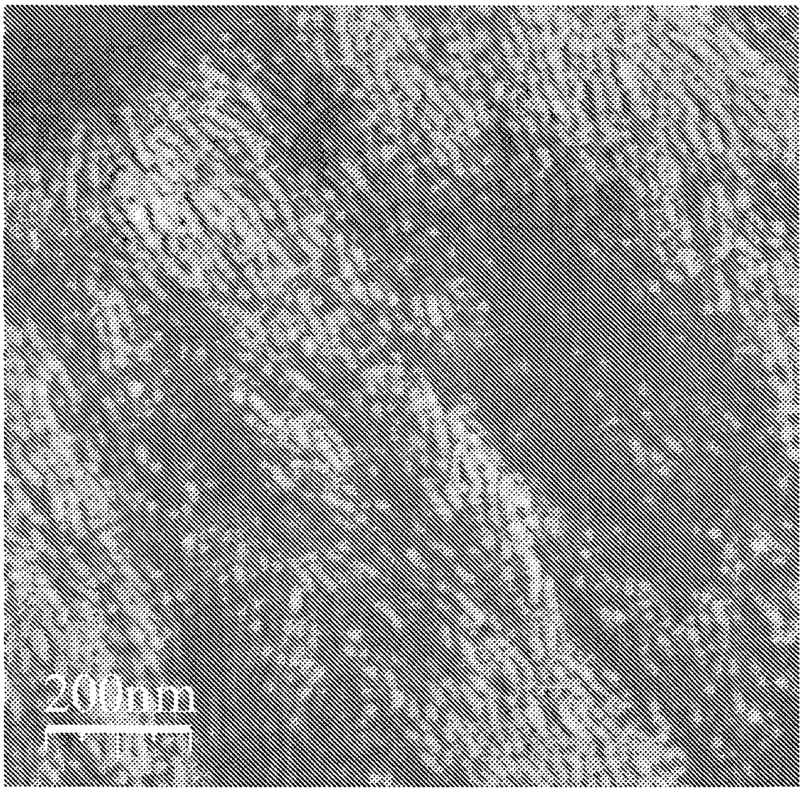


FIG.6

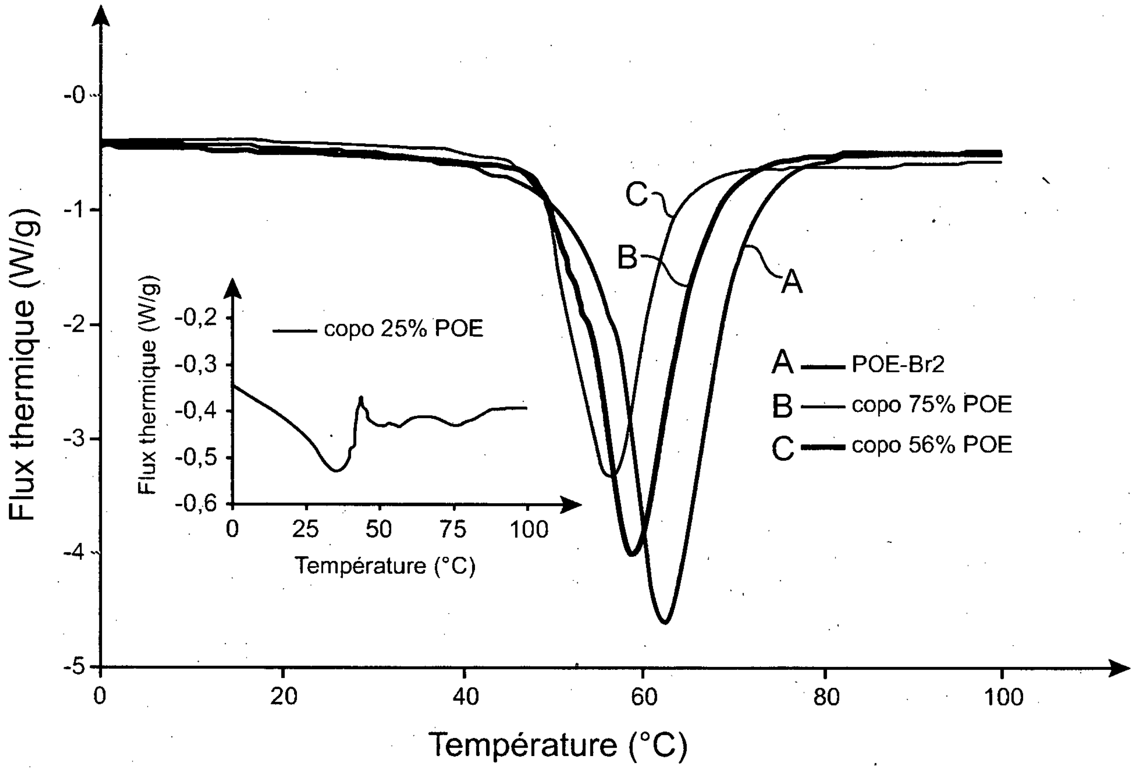

Flux thermique (W/g)
-0
-1
-2
-3
-4
-5
0
20
40
60
80
100
Température (°C)
C
B
A
A POE-Br2
B copo 75% POE
C copo 56% POE
Flux thermique (W/g)
-0,2
-0,3
-0,4
-0,5
-0,6
0
25
50
75
100
Température (°C)
copo 25% POE


FIG. 7

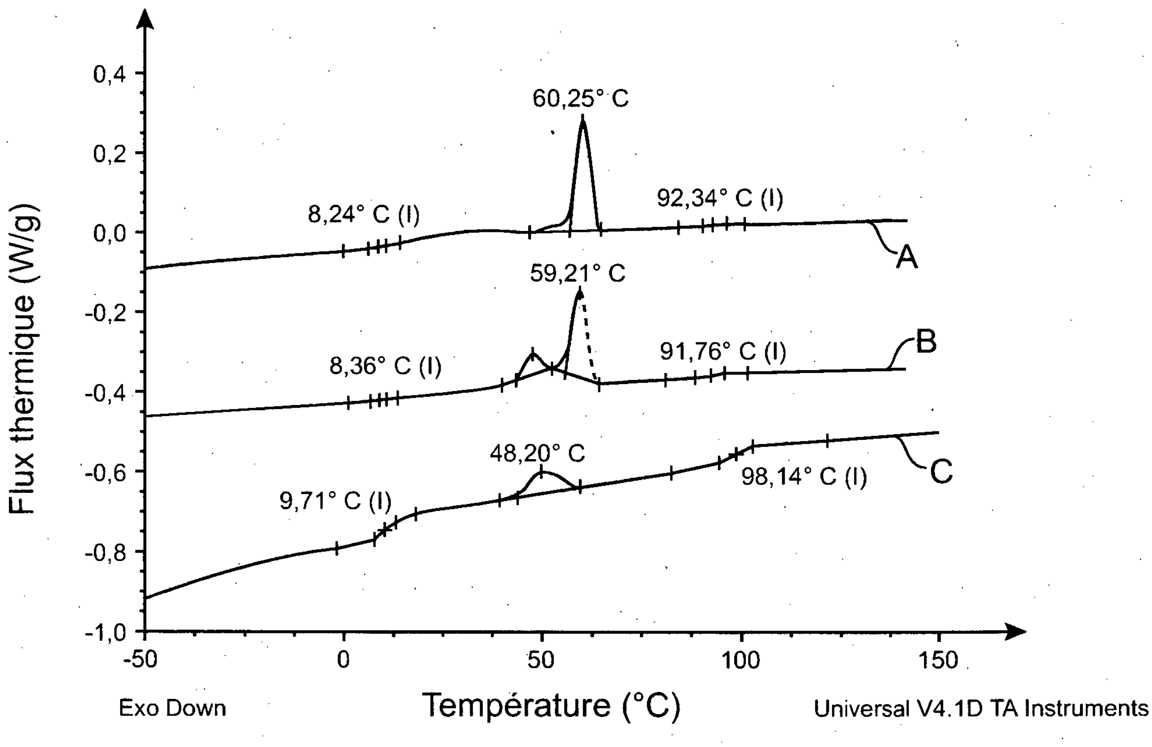

Flux thermique (W/g)
0,4
0,2
0,0
-0,2
-0,4
-0,6
-0,8
-1,0
-50
0
50
100
150
60,25° C
8,24° C (I)
92,34° C (I)
A
59,21° C
8,36° C (I)
91,76° C (I)
B
48,20° C
9,71° C (I)
98,14° C (I)
C
Exo Down
Température (°C)
Universal V4.1D TA Instruments


FIG. 8

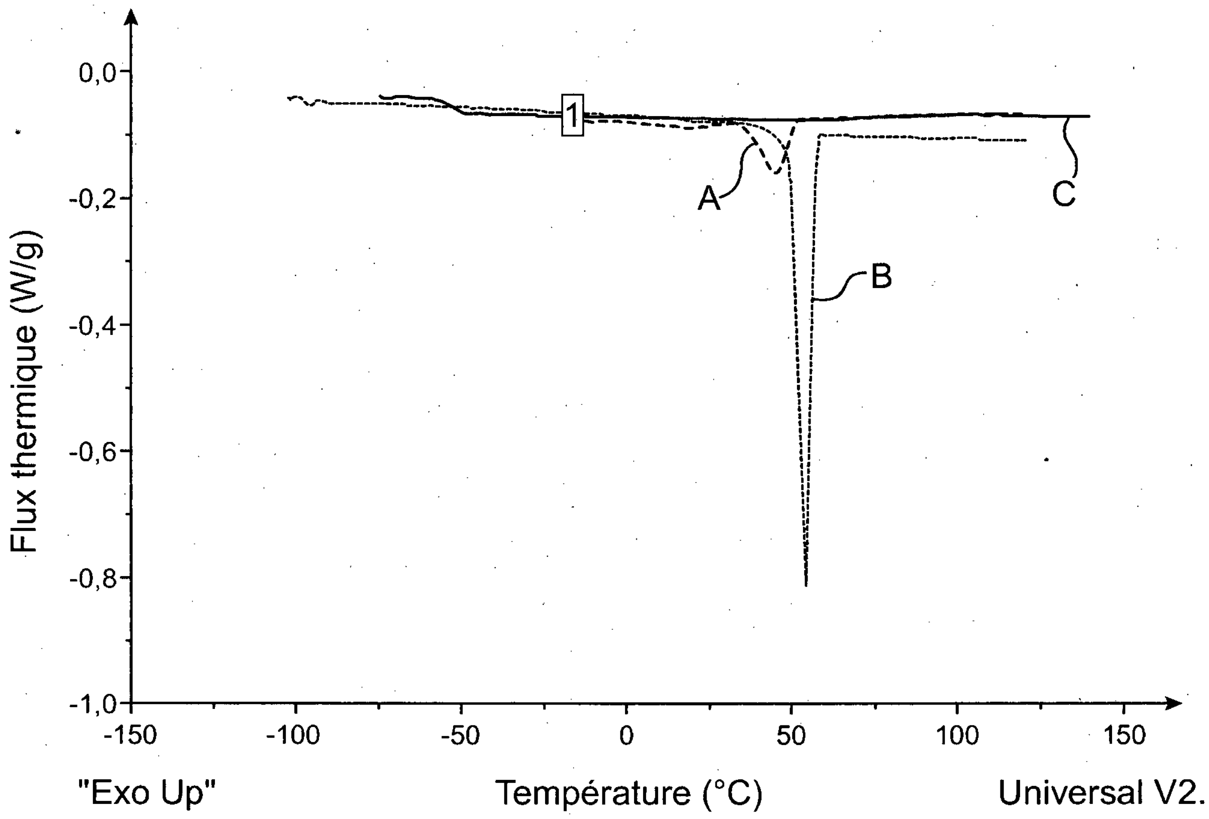
0,0
-0,2
-0,4
-0,6
-0,8
-1,0
Flux thermique (W/g)
1
A
B
C
-150
-100
-50
0
50
100
150
"Exo Up"
Température (°C)
Universal V2.

FIG. 9

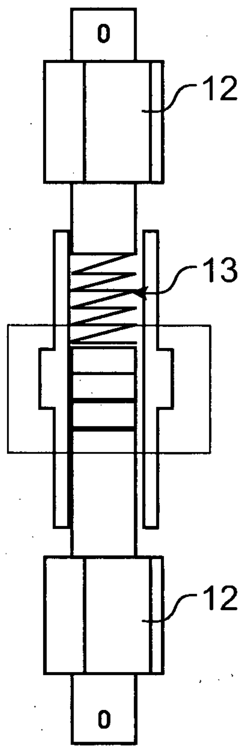
0
12
13
12
0

FIG. 10

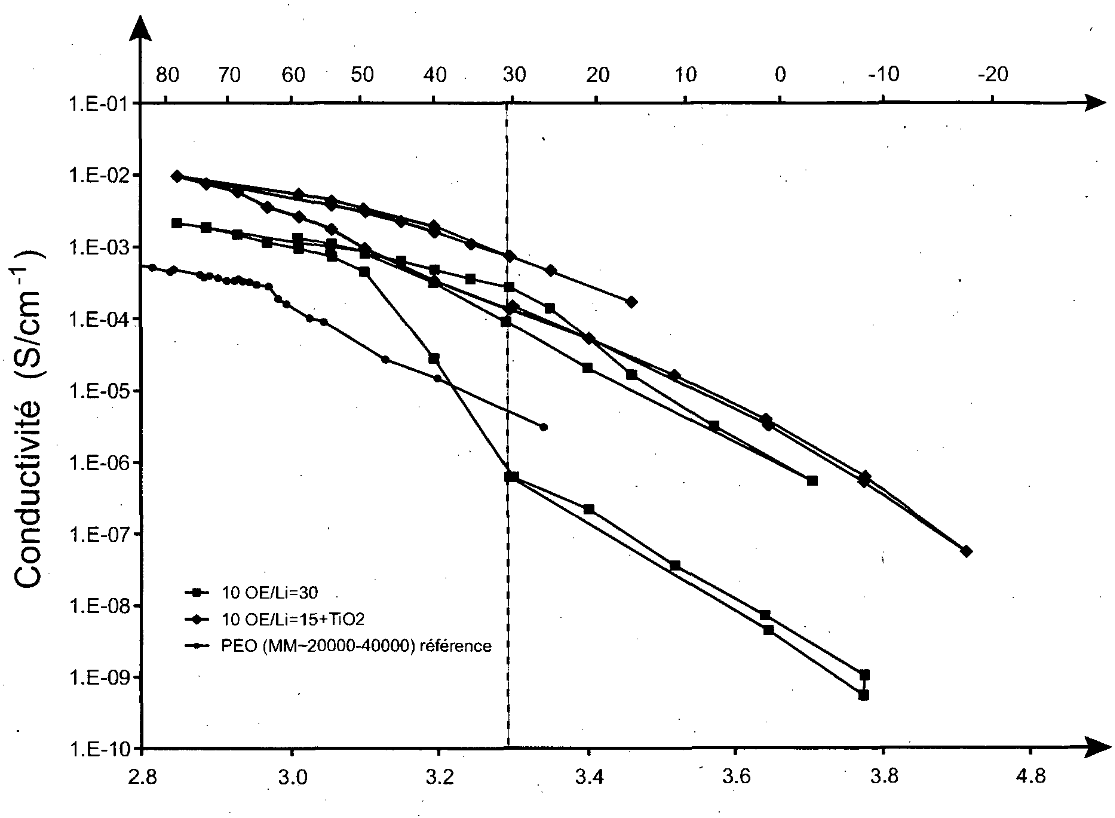
80
70
60
50
40
30
20
10
0
-10
-20
1.E-01
1.E-02
1.E-03
1.E-04
1.E-05
1.E-06
1.E-07
1.E-08
1.E-09
1.E-10
Conductivité (S/cm-1)
10 OE/Li=30
10 OE/Li=15+TiO2
PEO (MM~20000-40000) référence
2.8
3.0
3.2
3.4
3.6
3.8
4.8
1000/T (10-3.K-1)

FIG. 11

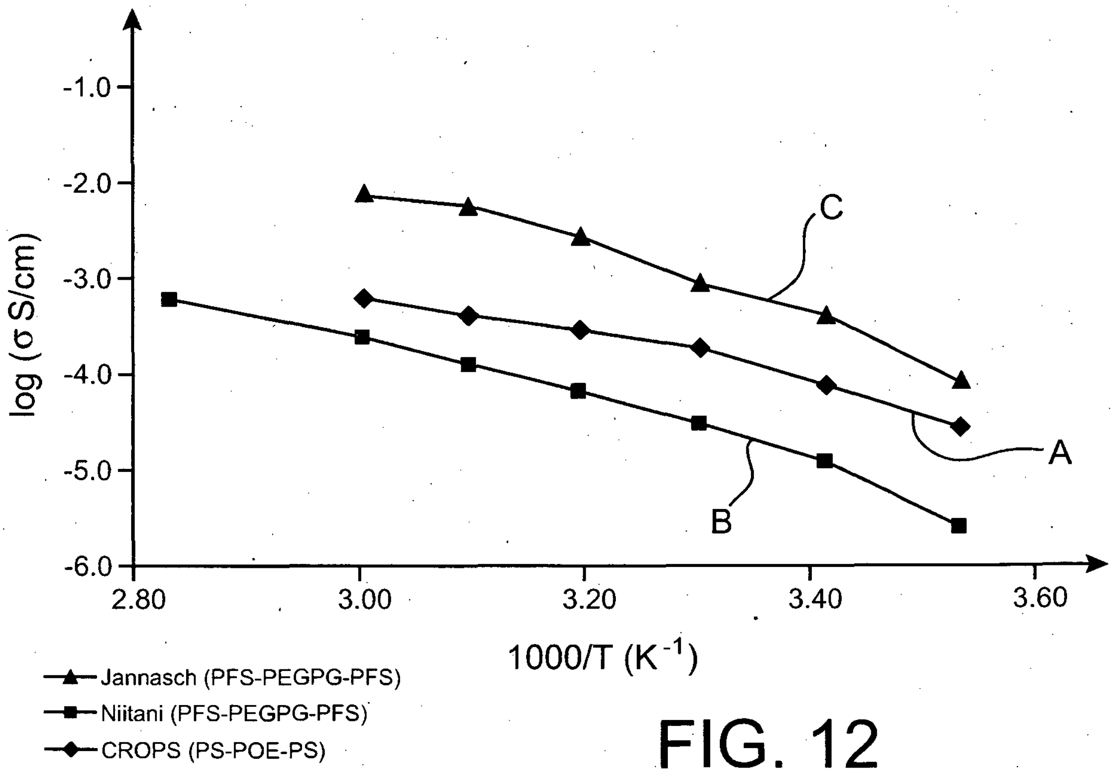
-1.0
-2.0
-3.0
-4.0
-5.0
-6.0
log (σ S/cm)
C
A
B
2.80
3.00
3.20
3.40
3.60
1000/T (K-1)
Jannasch (PFS-PEGPG-PFS)
Niitani (PFS-PEGPG-PFS)
CROPS (PS-POE-PS)

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1553117 A


### Littérature non-brevet citée dans la description


- **M. ARMAND.** *Journal of Power Sources,* 1979, vol. 4, 251
- **SADOWAY, D.R.** Block and graft copolymer electrolytes for high-performance, solid-state, lithium batteries. *J. Power Sources,* 2004, vol. 129, 1-3
- **RUZETTE, A.-V.G. ; SOO, P.P ; SADOWAY, D.R. ; MAYES, A.M.** Melt-Formable Block Copolymer Electrolytes for Lithium Rechargeable Batteries. *J. Electrochemical Society,* 2001, vol. 148, A537-A543
- **SOO, P.P. ; HUANG, B. ; JANG, Y.-I. ; CHIANG, Y.-M. ; SADOWAY, D.R. ; A.M.** Rubbery Block Copolymer Electrolytes for Solid-State Rechargeable Lithium Batteries. *J. Electrochemical Society,* 1999, vol. 148, 32-37
- **TRAPA, P.E. ; HUANG, B. ; WON, Y.-Y. ; SADOWAY, D.R. ; MAYES, A.M.** Block Copolymer Electrolytes Synthetized by Atom Transfer Radical Polymerization for Solid-State, Thin-Film Lithium Batteries. *Electrochemical Solid-State Letters,* 2002, vol. 5, A85-A88
- **K. JANKOVA ; P. JANNASCH ; HVILSTED, S.** Ion conducting solid polymer electrolytes based on polypentafluorostyerene-b-polyether-b-polypentafluorostyrene prepared by atom transfer radical polymerization. *J. Mater. Chem.,* 2004, vol. 14, 2902-2908
- **NIITANI, T. ; SHIMADA, M. ; KAWAMURA, K. ; DOKKO, K. ; RHO, Y.H. ; KANAMURA, K.** Synthesis Li+ ion conductive PEO-PSt block copolymer electrolyte with Microphase separation structure. *Electrochemical Solid-State Letters,* 2005, vol. 8 (8), A385-A388
- **NIITANI, T. ; SHIMADA, M. ; KAWAMURA, K. ; KANAMURA, K.** Characteristics of new-type solid polymer electrolyte controlling nano-structure. *J. Power Sources,* 2005, vol. 146, 386-390